(19) Europäisches Patentamt / European Patent Office / Office européen des brevets

(11) **EP 3 727 768 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **18830153.5**

(22) Anmeldetag: **10.12.2018**

(51) Internationale Patentklassifikation (IPC):
**B25J 15/00** *(2006.01)*      **B25J 15/02** *(2006.01)*
**B25J 15/06** *(2006.01)*      **B21D 43/18** *(2006.01)*

(52) Gemeinsame Patentklassifikation (CPC):
**B25J 15/0616; B21D 43/18; B25J 15/0061**

(86) Internationale Anmeldenummer:
**PCT/EP2018/084187**

(87) Internationale Veröffentlichungsnummer:
**WO 2019/121110 (27.06.2019 Gazette 2019/26)**

(54) **VERFAHREN ZUM ANHEBEN EINES PLATTENFÖRMIGEN METALLISCHEN WERKSTÜCKS SOWIE BE- UND/ODER ENTLADEVORRICHTUNG**

METHOD FOR LIFTING A PLATE-LIKE METAL WORKPIECE, AND LOADING AND/OR UNLOADING APPARATUS

PROCÉDÉ PERMETTANT DE SOULEVER UNE PIÈCE MÉTALLIQUE EN FORME DE PLAQUE AINSI QUE DISPOSITIF DE CHARGEMENT ET/OU DE DÉCHARGEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017   DE 102017223574**

(43) Veröffentlichungstag der Anmeldung:
**28.10.2020   Patentblatt 2020/44**

(73) Patentinhaber: **TRUMPF Werkzeugmaschinen SE + Co. KG**
**71254 Ditzingen (DE)**

(72) Erfinder:
• **BLOEMKER, Christoph**
  **70197 Stuttgart (DE)**
• **DEISS, Magnus**
  **70372 Stuttgart (DE)**
• **OTTNAD, Jens**
  **76199 Karlsruhe (DE)**
• **MATTER, Fabian**
  **70565 Stuttgart (DE)**

(74) Vertreter: **Trumpf Patentabteilung**
**TRUMPF SE & Co. KG**
**IP + Licenses (TH550)**
**Johann-Maus-Straße 2**
**71254 Ditzingen (DE)**

(56) Entgegenhaltungen:
DE-A1-102016 110 542      DE-A1-102016 207 188
JP-A- H06 134 534

## Beschreibung

Die vorliegende Erfindung betrifft ein Verfahren zum Anheben eines plattenförmigen metallischen Werkstücks mittels einer Haltevorrichtung, insbesondere mittels einer Greif- oder Sauggreifvorrichtung, umfassend: Aufsetzen einer Mehrzahl von Halteelementen, insbesondere von Greif- oder Sauggreifelementen, der Haltevorrichtung auf das in einer Lagerungsebene gelagerte plattenförmige Werkstück sowie Halten des Werkstücks an einer Mehrzahl von den Halteelementen zugehörigen Haltepositionen, wobei mindestens ein erstes und zweites Halteelement an einer ersten und einer zweiten Halteposition entlang einer zweiten Richtung voneinander beabstandet sind, sowie Anheben des Werkstücks aus der Lagerungsebene mittels der Haltevorrichtung, elastisches Verformen des Werkstücks durch Anheben des ersten Halteelements relativ zum zweiten Halteelement oder des zweiten Halteelements relativ zum ersten Halteelement in einer Hubrichtung senkrecht zur Lagerungsebene, wobei beim elastischen Verformen das axiale Flächenträgheitsmoment des Werkstücks in der zweiten Richtung an einem Querschnitt des Werkstücks, welcher die erste und die zweite Halteposition enthält, auf mindestens das 1,5-Fache erhöht wird, um die Durchbiegung des angehobenen Werkstücks entlang einer ersten Richtung, die bevorzugt senkrecht zur zweiten Richtung verläuft, zu verringern. Die Erfindung betrifft auch eine Be- und/oder Entladevorrichtung zum Anheben eines plattenförmigen metallischen Werkstücks, umfassend: eine Haltevorrichtung, insbesondere eine Greif- oder eine Sauggreifvorrichtung, die eine Mehrzahl von Halteelementen, insbesondere von Greif- oder von Sauggreifelementen, aufweist, wobei die Halteelemente in einer Hubrichtung heb- und senkbar sind, sowie eine Steuerungseinrichtung, die ausgebildet bzw. programmiert ist, die Haltevorrichtung anzusteuern, die Mehrzahl von Halteelementen auf das in einer Lagerungsebene gelagerte Werkstück aufzusetzen und an einer Mehrzahl von den Halteelementen zugeordneten Haltepositionen zu halten, wobei mindestens ein erstes und zweites Halteelement an einer ersten und einer zweiten Halteposition entlang einer zweiten Richtung voneinander beabstandet sind, wobei die Steuerungseinrichtung ausgebildet ist, zur Verringerung der Durchbiegung des angehobenen Werkstücks die Haltevorrichtung anzusteuern, das erste Halteelement relativ zu dem zweiten Halteelement in einer Hubrichtung senkrecht zu einer Lagerungsebene des Werkstücks anzuheben oder umgekehrt, um unter elastischer Verformung des Werkstücks das axiale Flächenträgheitsmoment des Werkstücks in der zweiten Richtung an einem Querschnitt, welcher die erste und die zweite Halteposition enthält, auf mindestens das 1,5-Fache zu erhöhen.

Eine solche Vorrichtung in Form eines Endeffektors und ein entsprechendes Verfahren zum Handhaben eines flächigen Halbzeugs sind aus der DE 10 2016 207 188 A1 bekannt geworden.

In der JPH06134534A ist eine Vorrichtung zum Transportieren einer Stahlplatte beschrieben, wobei die Vorrichtung eine Mehrzahl von Sauggreifern zum Ansaugen einer Oberseite der Stahlplatte aufweist. Ein endseitig vorgesehener Sauggreifer wird mit Hilfe einer Greifer-Hubvorrichtung mehrmals ausgehend von einem unteren Ende des Sauggreifer-Hubes auf eine Zwischenhöhe angehoben, um die Stahlplatte von einer darunter liegenden Stahlplatte zu trennen. War das Trennen erfolgreich, werden alle Sauggreifer angehoben, um die Stahlplatte anzuheben. Der Sauggreifer, der sich auf der Zwischenhöhe befindet, erreicht hierbei zuerst das obere Ende des Hubes und wartet, bis die anderen Sauggreifer das obere Ende des Hubes erreicht haben.

Aus der US3826485A ist eine Vorrichtung zum Ansaugen und Anheben eines obersten Plattenmaterials, beispielsweise einer dünnen Kunststoffplatte, von einem Stapel von Plattenmaterialien beschrieben. Bei dem Verfahren wird das Plattenmaterial an einem Ende und in einem Zwischenabschnitt zwischen einem zentralen Abschnitt und dem anderen Ende des Plattenmaterials angesaugt. Das Plattenmaterial wird zunächst an dem einen Ende angehoben, während das Plattenmaterial in einem Abschnitt zwischen den angesaugten Abschnitten niedergedrückt wird, um zwischen den angesaugten Abschnitten eine Biegung des Plattenmaterials zu erzeugen.

Aus der EP 2 952 302 A2 ist eine Haltevorrichtung mit einer Mehrzahl von Greifvorrichtungen bekannt geworden, welche derart relativ zueinander verlagerbar an einer Tragestruktur angeordnet sind, dass die Greifvorrichtungen durch ihre Verlagerung an eine Freiformfläche anpassbar sind. Die Tragestruktur umfasst eine Vielzahl von miteinander beweglich verbundenen Trageelementen, an denen Greifvorrichtungen angeordnet sind, wobei mehrere der Trageelemente in einer Reihe angeordnet und zu einer Tragekette derart verbunden sind, dass die Tragekette durch die Bewegung der Trageelemente relativ zueinander formanpassbar ist.

In der DE 10 2014 008 665 A1 ist eine Vorrichtung zum Transportieren und Ablegen flächiger, insbesondere schlaffer Faserhalbzeugzuschnitte beschrieben, die einen Roboter und eine an dessen Roboterarm angebundene Greifeinrichtung mit mehreren Greifern zur Aufnahme wenigstens eines Faserhalbzeugzuschnitts aufweist, wobei zumindest einige der Greifer beweglich an der Greifeinrichtung angeordnet und mittels Antrieb aktiv bewegbar sind, so dass der aufgenommene Faserhalbzeugzuschnitt beim Transportieren durch definiertes Bewegen dieser Greifer gezielt verformt werden kann.

In der DE 10 2011 106 214 A1 ist ein Endeffektor, insbesondere ein Greifwerkzeug, für einen Manipulator beschrieben, der mit einem verformbaren, vorzugsweise biegeschlaffen flächigen Werkstück zusammenwirkt, wobei mindestens ein insbesondere als Trägerplatte ausgestalteter Träger vorgesehen ist, der zumindest zum Teil aus einem insbesondere elastisch verformbaren Material ausgestaltet ist.

An dem Träger ist eine Werkzeuganordnung in Form einer Greiferanordnung angebracht, die bei einer Verformung des Trägers im Raum ausrichtbar ist.

Beim Transport eines flächigen bzw. plattenförmigen Werkstücks, z.B. eines flächigen Halbzeugs oder eines metallischen Werkstücks (eines Blechs), mit Hilfe einer Haltevorrichtung, z.B. in Form einer Greif- oder Sauggreifvorrichtung, ergibt sich beim Anheben des plattenförmigen Werkstücks eine Durchbiegung des Werkstücks. Die Durchbiegung ist von den Haltepositionen, an denen die Halteelemente beispielsweise in Form von Greifern bzw. in Form von Sauggreifern angeordnet sind, sowie von der Eigensteifigkeit des Werkstücks abhängig.

Beim Anheben eines plattenförmigen Werkstücks muss dieses an mehreren Haltepositionen so gegriffen bzw. unterstützt werden, dass die Durchbiegung ein bestimmtes Maß nicht übersteigt, um eine ausreichende Haltekraft der Haltevorrichtung zu gewährleisten. Soll das Werkstück transportiert werden, beispielsweise von einer Werkstückauflage einer Werkzeugmaschine zu einem Ablageort (oder umgekehrt), so ergibt sich aus der verbleibenden Durchbiegung der notwendige Hub der Hebemechanik der Halteeinrichtung für das Anheben des Werkstücks in einer Hubrichtung senkrecht zur Lagerungsebene. Bei weniger eigensteifen Werkstücken müssen also entweder viele Stützstellen bzw. Haltepositionen und somit viele Halteelemente vorhanden sein oder der notwendige Hub der Hebemechanik wird größer, was in beiden Fällen zu einer größeren und/oder teureren Bauform der Be- und Entladevorrichtung führt.

Aufgabe der Erfindung

Der Erfindung liegt die Aufgabe zugrunde, ein Verfahren zum Anheben eines plattenförmigen metallischen Werkstücks bereitzustellen, welches den Einsatz einer Be- und/oder Entladevorrichtung mit einer einfachen und kostengünstigen Bauform ermöglicht. Es ist eine weitere Aufgabe der Erfindung, eine Be- und/oder Entladevorrichtung mit einer solchen einfachen und kostengünstigen Bauform bereitzustellen.

Gegenstand der Erfindung

Diese Aufgabe wird erfindungsgemäß durch ein Verfahren der eingangs genannten Art gelöst, bei dem das erste und das zweite Halteelement an einer gemeinsamen Tragstruktur der Haltevorrichtung angebracht sind, die in der ersten Richtung verschiebbar ist.

Es wird vorgeschlagen, die Durchbiegung des aus der Lagerungsebene angehobenen, von den Halteelementen gehaltenen Werkstücks zu verringern, indem die Eigensteifigkeit des Werkstücks durch eine elastische Verformung erhöht wird. Um dies zu erreichen, werden einzelne Halteelemente, beispielsweise einzelne Sauger, Greifer oder Sauggreifer, die das in der Lagerungsebene gelagerte Werkstück greifen, angehoben und andere Halteelemente verbleiben in einer nicht-angehobenen oder in einer weniger stark angehobenen Stellung, so dass das Werkstück elastisch verformt wird.

Wird das erste Halteelement relativ zu dem zweiten Halteelement angehoben, wird zwischen dem ersten und dem zweiten Haltelement eine gekrümmte Querschnittsgeometrie des Werkstücks erzeugt. Auf diese Weise wird entlang eines Querschnitts des Werkstücks, auf dem die beiden Halteelemente bzw. die Haltepositionen liegen, das axiale Flächenträgheitsmoment erhöht. Das erste und das zweite Halteelement müssen in der zweiten Richtung nicht zwingend benachbart zueinander angeordnet sein, d.h. es können weitere Halteelemente zwischen dem ersten und dem zweiten Halteelement angeordnet sein. Auch ist die Anordnung der Halteelemente entlang der zweiten Richtung grundsätzlich beliebig, d.h. die Bezeichnung "erstes" bzw. "zweites" Halteelement legt nicht die Reihenfolge der Halteelemente fest. Gleiches gilt für ein ggf. vorhandenes drittes, viertes, ... Halteelement. Unter den Haltepositionen der Halteelemente werden zweidimensionale Koordinaten (z.B. X/Y-Koordinaten) in der Lagerungsebene bzw. in einer zu dieser parallelen Ebene verstanden.

Die Erhöhung des axialen Flächenträgheitsmoments führt zu einer Erhöhung der Eigensteifigkeit des Werkstücks, da die (maximale) Durchbiegung des Werkstücks entlang einer ersten, typischerweise zur zweiten senkrechten Richtung sich antiproportional zum (axialen) Flächenträgheitsmoment des Werkstücks entlang der zweiten Richtung verhält. Durch die elastische Verformung des Werkstücks bildet sich somit eine sogenannte "elastische Sicke" im Werkstück aus und das Werkstück hängt beim Anheben und ggf. beim Transport deutlich weniger durch.

Dies kann erreicht werden, indem das axiale Flächenträgheitsmoment des elastisch deformierten Werkstücks entlang der zweiten Richtung auf mindestens das 1,5-Fache, d.h. um mindestens 50% gegenüber dem axialen Flächenträgheitsmoment des nicht elastisch deformierten Werkstücks vergrößert wird, wobei das axiale Flächenträgheitsmoment bevorzugt auf mindestens das das 3-Fache gegenüber dem nicht elastisch deformierten Werkstück erhöht wird. Der Querschnitt, dessen axiales Flächenträgheitsmoment um mindestens das 1,5-Fache vergrößert wird, verläuft in einer Ebene, welche die Hubrichtung und die beiden Haltepositionen enthält. Das axiale Flächenträgheitsmoment ist wie allgemein üblich auf den Flächenschwerpunkt dieses Querschnitts bezogen.

Die elastische Verformung des Werkstücks wird beim Anheben und ggf. beim Transport des Werkstücks beibehalten und erst beim oder nach dem Ablegen des Werkstücks auf einer Unterlage (z.B. der Werkstückauflage einer Bearbeitungsmaschine oder einem anderen Ablageort) wieder aufgehoben. Voraussetzung hierfür ist, dass die sich ausbildende elastische Verformung des Werkstücks auch beim Anheben des Werkstücks bzw. beim Hängen des Werkstücks im von der Lagerungsebene abgehobenen Zustand an der Haltevorrichtung stabil bleibt. Außerdem darf das Werkstück nur im elastischen Bereich, d.h. unterhalb der Streckspannung, belastet werden, da ansonsten die Verformung dauerhaft bestehen bleibt.

Für den Transport des elastisch verformten Werkstücks kann dieses mittels der Haltevorrichtung angehoben auf ein geeignetes Auflageteil abgelegt werden, das unter dem angehobenen Werkstück positioniert wird und das zum Transport des abgelegten Werkstücks dient. Gegebenenfalls kann aber auch die Haltevorrichtung mit dem elastisch verformten, an der Haltevorrichtung gehaltenen Werkstück für den Transport des Werkstücks mit Hilfe einer geeigneten Bewegungseinrichtung (gesteuert) in mindestens eine von der Hubrichtung abweichende Richtung bewegt werden.

Bei einer Variante des Verfahrens weist die Haltevorrichtung mindestens ein weiteres erstes und ein weiteres zweites Halteelement auf, die an einer weiteren ersten und einer weiteren zweiten Halteposition entlang der zweiten Richtung voneinander beabstandet und in einer ersten Richtung von dem ersten und dem zweiten Halteelement beabstandet sind, wobei das elastische Verformen des Werkstücks das Anheben des ersten weiteren Halteelements relativ zum zweiten weiteren Halteelement oder des zweiten weiteren Halteelements relativ zum ersten weiteren Halteelement in einer Hubrichtung senkrecht zur Lagerungsebene umfasst, und wobei beim elastischen Verformen das axiale Flächenträgheitsmoment des Werkstücks in der zweiten Richtung an einem weiteren Flächenquerschnitt des Werkstücks, welcher die weitere erste und die weitere zweite Halteposition enthält, auf mindestens das 1,5-Fache, ggf. auf mindestens das 3-Fache erhöht wird, wobei bevorzugt das weitere erste und das weitere zweite Halteelement an einer weiteren gemeinsamen Tragstruktur der Haltevorrichtung angebracht sind, die entlang der ersten Richtung verschiebbar ist.

Bei den Tragstrukturen kann es sich beispielsweise um Tragbalken oder dergleichen handeln. Die Haltepositionen des ersten, des zweiten sowie ggf. zusätzlicher (dritter, vierter, ...) Halteelemente in der ersten Richtung können in diesem Fall nur gemeinsam verändert werden, indem die Tragstruktur verschoben wird. Gleiches gilt für das weitere erste, das weitere zweite sowie ggf. für weitere zusätzliche (dritte, vierte, ...) Halteelemente und die weitere Tragstruktur.

Es hat sich als günstig erwiesen, wenn an den Querschnitten des Werkstücks in der zweiten Richtung, an denen Halteelemente aus der nicht-angehobenen Stellung angehoben werden, die hierbei erzeugte Querschnittsgeometrie im Wesentlichen gleich oder zumindest ähnlich ist, um eine möglichst gleichförmige elastische Verformung des Werkstücks entlang der ersten Richtung zu erzeugen und auf diese Weise die Durchbiegung des Werkstücks zu reduzieren. Ist der Abstand in der ersten Richtung zwischen dem Querschnitt an der ersten und der zweiten Halteposition und dem weiteren Querschnitt an der weiteren ersten und der weiteren zweiten Halteposition nicht zu groß, nehmen auch die Querschnitte des Werkstücks, die in der ersten Richtung zwischen diesen beiden Querschnitten liegen, annähernd dieselbe Querschnittsgeometrie an, d.h. die Eigensteifigkeit des Werkstücks wird gleichförmig erhöht.

Bei einer weiteren Variante wird durch das elastische Verformen an mindestens einer Seitenkante des Werkstücks eine von einer Geraden abweichende, gekrümmte Querschnittsgeometrie erzeugt. Ist der Abstand der Seitenkante des Werkstücks in der ersten Richtung nicht zu weit von der ersten und der zweiten Halteposition entfernt, bleibt die von einer Geraden abweichende, gekrümmte Querschnittsgeometrie, die zwischen dem ersten und dem zweiten Halteelement erzeugt wird, auch an der benachbarten Seitenkante des Werkstücks erhalten.

Bei einer weiteren Variante wird durch das elastische Verformen an den beiden Seitenkanten des Werkstücks, die parallel zur zweiten Richtung verlaufen, eine von einer Geraden abweichende, gekrümmte Querschnittsgeometrie erzeugt. Die zweite Richtung erstreckt sich typischerweise quer zu einer maximalen Ausdehnung des Werkstücks (Längsrichtung), die in der Regel entlang der ersten Richtung verläuft. Insbesondere für den Fall, dass es sich bei dem Werkstück um ein Restgitter handelt, aus dem Werkstückteile ausgeschnitten und entnommen wurden, kann es aber ggf. sinnvoll sein, eine gekrümmte Querschnittsgeometrie des Werkstücks entlang seiner Längsrichtung zu erzeugen, um die Durchbiegung des Werkstücks entlang der Querrichtung zu reduzieren. Das Werkstück wird also vorzugsweise derart elastisch verformt, dass diejenigen Seitenkanten eine von einer Gerade abweichende Form aufweisen, die parallel zu der Achse verlaufen, um die die maximale Durchbiegung des nicht-verformten Werkstücks beim Anheben erfolgen würde.

Wird das erste Halteelement relativ zum zweiten Halteelement angehoben (oder umgekehrt) entsteht bei der elastischen Verformung zwischen dem ersten und dem zweiten Halteelement in der Regel eine S-förmige Querschnittsgeometrie des Werkstücks. Sind entlang einer Geraden, welche die Verbindungslinie zwischen den beiden Haltepositionen enthält, keine zusätzlichen Halteelemente vorgesehen oder werden diese nicht zur elastischen Verformung des Werkstücks genutzt, ergibt sich insgesamt eine gekrümmte, S-förmige Geometrie des Werkstücks entlang dieses Querschnitts.

Bei einer weiteren Variante werden beim elastischen Verformen des Werkstücks das erste Halteelement und ein drittes Halteelement, welches entlang der zweiten Richtung auf der dem ersten Halteelement gegenüberliegenden Seite des zweiten Halteelements angeordnet ist, relativ zum zweiten Halteelement angehoben, oder umgekehrt. Das erste, zweite und dritte Halteelement bzw. deren Haltepositionen sind bevorzugt entlang einer gemeinsamen, sich in der zweiten Richtung erstreckenden Geraden angeordnet, dies ist aber nicht zwingend erforderlich, d.h. es ist auch ein lateraler Versatz des dritten Halteelementes in der ersten Richtung relativ zum ersten und zweiten Halteelement möglich.

Durch das Anheben des ersten und dritten Halteelements relativ zu dem zweiten, dazwischen angeordneten Haltelement kann eine U-förmige Querschnittsgeometrie des Werkstücks in der zweiten Richtung entlang derjenigen Geraden erzeugt werden, auf der die drei den Halteelementen zugeordneten Haltepositionen sich befinden. Die Erzeugung einer U-förmigen Querschnittsgeometrie hat sich in der Praxis gegenüber der Erzeugung einer S-förmigen Querschnittsgeometrie als vorteilhaft erwiesen.

Es versteht sich, dass alternativ oder zusätzlich auch das weitere erste Halteelement und ein weiteres drittes Halteelement, welches entlang der zweiten Richtung auf der dem weiteren ersten Halteelement gegenüberliegenden Seite des weiteren zweiten Halteelements angeordnet ist, relativ zum weiteren zweiten Halteelement angehoben werden können, oder umgekehrt, um entlang eines die drei weiteren Halteelemente enthaltenden weiteren Querschnitts eine U-förmige Querschnittsgeometrie zu erzeugen.

Das Flächenträgheitsmoment entlang ein- und desselben Querschnitts kann durch das Anheben von vierten, fünften, ... Halteelementen relativ zueinander weiter erhöht werden, deren Haltepositionen typischerweise auf einer gemeinsamen Geraden liegen. In diesem Fall können entlang dieses Querschnitts z.B. mehrere U-förmige oder S-förmige Querschnittsbereiche ineinander übergehen. Allerdings lässt sich durch die Erzeugung eines S- bzw. U-förmigen Querschnitts in der Regel bereits eine signifikante Erhöhung des Flächenträgheitsmoments erreichen und die Anzahl der Halteelemente sollte möglichst niedrig gehalten werden.

Generell können durch das elastische Verformen Querschnitte bzw. Sicken von beliebiger Form bzw. Geometrie in das Werkstück eingebracht werden, um die Eigensteifigkeit des Werkstücks beim Anheben bzw. beim Transport zu erhöhen und somit die Durchbiegung zu reduzieren. Notwendig ist lediglich, dass die sich ausbildende dreidimensionale Geometrie des Werkstücks ohne Unterstützung von unten stabil bleibt.

Bei einer weiteren Variante wird durch das elastische Verformen in dem Werkstück eine S-förmige oder eine U-förmige Sicke gebildet, die sich bevorzugt in einer Richtung der maximalen Ausdehnung des Werkstücks, d.h. in Längsrichtung des Werkstücks, erstreckt. Die Längsrichtung des Werkstücks stimmt bevorzugt mit der ersten Richtung überein. Wird bei einem rechteckigen Werkstück, aus dem noch keine Werkstückteile ausgeschnitten wurden, ein gekrümmter Querschnitt quer zur maximalen Ausdehnung des Werkstücks erzeugt, ist dies für die Reduzierung der Durchbiegung des Werkstücks typischerweise günstiger als die Erzeugung eines gekrümmten Querschnitts in Längsrichtung des Werkstücks. Insbesondere kann die S-förmige oder U-förmige Sicke sich entlang der gesamten Längsrichtung des Werkstücks erstrecken, so dass an den beiden Seitenkanten des Werkstücks, die in Querrichtung parallel zueinander verlaufen, eine entsprechende, S-förmige bzw. U-förmige gekrümmte Querschnittsgeometrie erzeugt werden kann. Wie weiter oben beschrieben wurde, kann es insbesondere bei Werkstücken in Form von Restgittern, aus denen bereits Werkstückteile ausgeschnitten wurden, sinnvoll sein, wenn die gekrümmte Querschnittsgeometrie entlang der Längsrichtung des Werkstücks erzeugt wird.

Damit das Werkstück elastisch, aber nicht plastisch verformt wird, ist es notwendig festzustellen, ob bei vorgegebenen Werten für die Haltepositionen der Halteelemente, für den relativen Abstand zwischen den Halteelementen in Hubrichtung sowie für die Materialeigenschaften des Werkstücks die Streckgrenze des Werkstückmaterials erreicht wird. Die Streckgrenze darf nicht überschritten werden, da das Werkstück ansonsten dauerhaft plastisch verformt wird. Ebenso kann berechnet werden, welchen Abstand die Halteelemente bzw. die Haltepositionen bei einem gewünschten Hub bzw. bei einer gewünschten relativen Höhendifferenz der Halteelemente in Hubrichtung haben müssen, damit es zu keiner plastischen Verformung des Werkstücks kommt. Für den Fall einer S-förmigen Querschnittsgeometrie und einer U-förmigen Querschnittsgeometrie kann unter vereinfachenden Annahmen die in das Werkstück eingebrachte Spannung bestimmt werden, ohne dass zu diesem Zweck eine numerische Simulation notwendig ist.

Bei einer weiteren Variante des erfindungsgemäßen Verfahrens wird daher ein Abstand in Hubrichtung zwischen dem ersten und dem zweiten Halteelement nicht größer gewählt als ein Drittel des Abstands in der zweiten Richtung zwischen dem ersten und dem zweiten Halteelement. Wie oben beschrieben wurde, muss bei der Verformung des Werkstücks darauf geachtet werden, dass das metallische Werkstück nicht dauerhaft plastisch verformt wird, d.h. die Streckgrenze darf nicht überschritten werden. Soll ein metallisches Werkstück aus Stahl mit Hilfe der Haltevorrichtung transportiert werden, kann bei der Einhaltung der oben genannten Bedingung in der Regel sichergestellt werden, dass die Streckgrenze nicht überschritten wird.

Generell gilt, dass die Haltepositionen der Halteelemente, z.B. der Sauger oder Greifer, in Abhängigkeit von den Abmessungen des in der Regel rechteckigen Werkstücks, d.h. von dessen Breite und Länge, sowie von dessen Materialeigenschaften (Elastizitätsmodul, Streckgrenze, Querkontraktionszahl / Poissonzahl, Dichte) festgelegt werden. Bei höherer Festigkeit des Werkstücks (d.h. größerem Elastizitätsmodul) ist ein größerer Abstand der Halteelemente oder ein geringerer Hub notwendig, um die Streckgrenze nicht zu überschreiten. Eine größere Streckgrenze des Werkstücks erlaubt größeren Hub bzw. einen kleineren zulässigen Abstand zwischen benachbarten Halteelementen, die für die elastische Verformung des Werkstücks verwendet werden.

Bei einer weiteren Variante wird der relative Abstand der Halteelemente in Hubrichtung beim elastischen Verformen kleiner gewählt als eine Durchbiegung des angehobenen, nicht elastisch verformten Werkstücks entlang der ersten Richtung. Unter der Durchbiegung des angehobenen Werkstücks wird wie allgemein üblich der relative Abstand zwischen dem obersten und dem untersten Punkt des Werkstücks in Hubrichtung verstanden. Die obige Bedingung an den relativen Abstand der Halteelemente in Hubrichtung muss eingehalten werden, da ansonsten durch das Anheben des bzw. der Halteelemente zwar die Eigensteifigkeit des Werkstücks erhöht würde, die Erstreckung des Werkstücks in Hubrichtung bzw. dessen Durchbiegung aber nicht verringert, sondern vergrößert würde.

Zur Bestimmung eines funktionalen Zusammenhangs zwischen dem Hub h bzw. dem relativen Abstand zwischen den Halteelementen in Hubrichtung und der (maximalen) Durchbiegung $D_M$ des Werkstücks entlang der ersten Richtung kann das Werkstück vereinfacht als ein sich in der ersten Richtung erstreckender einseitig eingespannter Biegebalken (Fall A) und/oder als beidseitig eingespannter Biegebalken (Fall B) angenähert werden. Bei der Belastung mit einer Streckenlast $F_L$, welche dem Eigengewicht des Werkstücks entspricht, ergibt sich für die Durchbiegung $D_{M,A}$ in Fall A:

$$D_{M,A} = F_L\, L_A^4\, /\, (\, 8\, E\, I_y\, ),$$

wobei $L_A$ den Abstand zwischen dem eingespannten und dem freien Ende des Biegebalkens, $I_Y$ das Flächenträgheitsmoment des Werkstücks in der zweiten Richtung (Y-Richtung) und E das Elastizitätsmodul des Werkstückmaterials bezeichnen.

Für Fall B, d.h. wenn das Werkstück als beidseitig eingespannter Biegebalken angenähert wird, ergibt sich für die maximale Durchbiegung $D_{M,B}$ folgende Formel:

$$D_{M,B} = F_L\, L_B^4\, /\, (\, 384\, E\, I_y\, ),$$

wobei $L_B$ den Abstand zwischen den beiden Auflagern des Biegebalkens, $I_Y$ das Flächenträgheitsmoment des Werkstücks in der zweiten Richtung (Y-Richtung) und E das Elastizitätsmodul des Werkstückmaterials bezeichnen.

In beiden Fällen ist die Durchbiegung $D_{M,A}$, $D_{M,B}$ antiproportional zum Flächenträgheitsmoment $I_Y$ in der zweiten Richtung. Wie weiter oben beschrieben wurde, kann somit durch die Erzeugung eines relativen Abstandes der Halteelemente in Hubrichtung, bei der das Flächenträgheitsmoment $I_Y$ erhöht wird, eine Verringerung der maximalen Durchbiegung des Werkstücks erreicht werden.

Bevorzugt wird/werden das erste oder das zweite Halteelement und/oder das weitere erste oder das weitere zweite Halteelement in Hubrichtung angehoben, bevor das Werkstück aus der Lagerungsebene angehoben wird. Wie weiter oben beschrieben wurde, werden zunächst die Halteelemente auf das Werkstück aufgesetzt und aktiviert, um das Werkstück an den Haltepositionen zu halten. Es hat sich als günstig erwiesen, wenn das Anheben der für die elastische Verformung verwendeten Halteelemente in Hubrichtung abgeschlossen ist, bevor das Werkstück aus der Lagerungsebene angehoben wird. Für die Erzeugung der Bewegung der Halteelemente in Hubrichtung weist die Haltevorrichtung typischerweise eine der Anzahl von Halteelementen entsprechende Anzahl von Hubeinrichtungen auf, welche ein individuelles Anheben und Absenken der jeweiligen Halteelemente ermöglichen. Die Halteelemente können sich beim Aufsetzen auf das Werkstück zunächst am jeweils unteren Ende ihres individuellen Hubes befinden. Sobald das Werkstück an den Halteelementen gehalten wird, werden diejenigen Halteelemente in Hubrichtung angehoben, die eine elastische Verformung des Werkstücks bewirken sollen. Die jeweilige Position der Halteelemente in Hubrichtung wird nachfolgend, d.h. beim Anheben des Werkstücks aus der Lagerungsebene, sowie ggf. beim nachfolgenden Transport des Werkstücks mittels der Haltevorrichtung beibehalten. Alternativ kann das Anheben bzw. die Relativbewegung der Halteelemente erst während des Anhebens des Werkstücks erfolgen, d.h. wenn dieses bereits teilweise aus der Lagerungsebene angehoben wurde. Da dies zu einer höheren Belastung des Werkstücks führen kann, ist ein solches Vorgehen in der Regel jedoch eher ungünstig. In einer weiteren Variante kann mit dem Anheben des Werkstücks bereits begonnen werden, bevor die Positionierung der Halteelemente für die elastische Verformung des Werkstücks vollständig abgeschlossen ist, um das Anheben des Werkstücks zu beschleunigen.

Die Halteelemente, die gemeinsam an der Tragstruktur angebracht sind, können ggf. in der zweiten Richtung verschiebbar an der Tragstruktur gelagert sein. Gleiches gilt für die weiteren Halteelemente, die an der weiteren Tragstruktur angebracht sind. In diesem Fall sind typischerweise auch die Hubeinrichtungen für die Halteelemente in der zweiten Richtung verschiebbar an den Tragstrukturen gelagert. Die Haltevorrichtung kann ausgebildet sein, die Tragstruktur und die weitere Tragstruktur in Hubrichtung insbesondere synchron anzuheben. Das synchrone Anheben der Tragstrukturen kann insbesondere erfolgen, nachdem die elastische Verformung des Werkstücks abgeschlossen ist, um das elastisch verformte Werkstück aus der Lagerungsebene anzuheben.

Bei einer weiteren Variante werden die Haltepositionen der Mehrzahl von Halteelementen in der ersten Richtung und/oder in der zweiten Richtung relativ zum Werkstück derart gewählt, dass eine Durchbiegung des Werkstücks minimiert wird. Unabhängig von der Erzeugung der "elastischen Sicke" durch die Bewegung der Halteelemente entlang der Hubachse können die Koordinaten der Haltepositionen in der Lagerungsebene so gewählt bzw. so optimiert werden, dass die Durchbiegung des Werkstücks beim Anheben minimiert wird.

Bei einer Weiterbildung dieser Variante wird eine Koordinate mindestens einer Halteposition, insbesondere aller Haltepositionen, in der ersten Richtung und/oder eine Koordinate mindestens einer weiteren Halteposition, insbesondere aller weiterer Haltepositionen, in der ersten Richtung gewählt, die einen Abstand von einer jeweils benachbarten Seitenkante des Werkstücks aufweist, der zwischen 0,20 L und 0,24 L liegt, wobei L die Ausdehnung des Werkstücks in der ersten Richtung bezeichnet. Gibt es durch die Bauform der Be- und/oder Entladevorrichtung bzw. der Haltevorrichtung keine Einschränkungen hinsichtlich der Anordnung der Halteelemente, beispielsweise in Form von Saugern oder Greifern, so können für zwei Auflager- bzw. Haltepositionen in der ersten Richtung, die beispielsweise den Koordinaten der beiden Tragstrukturen in der ersten Richtung (X-Richtung) entsprechen, näherungsweise die beiden so genannten Bessel-Punkte gewählt werden. Die X-Koordinaten der ersten und der zweiten Halteposition bzw. der weiteren ersten und der weiteren zweiten Halteposition entsprechen somit den Bessel-Punkten. Für die Bessel-Punkte bzw. für die jeweiligen X-Koordinaten der Halteelemente in der ersten Richtung gilt jeweils: Abstand von der jeweiligen Seitenkante des Werkstücks zur Halteposition ~ 0,22 x Länge des Werkstücks.

Bei einer weiteren Weiterbildung weist eine Koordinate mindestens einer Halteposition in der zweiten Richtung und/oder eine Koordinate mindestens einer weiteren Halteposition in der zweiten Richtung einen Abstand zu einer jeweils benachbarten Seitenkante des Werkstücks auf, der zwischen 0,20 B und 0,24 B liegt, wobei B die Ausdehnung des Werkstücks in der zweiten Richtung bezeichnet. Für die Bessel-Punkte bzw. für die jeweiligen Y-Koordinaten der beiden Halteelemente bzw. der beiden weiteren Halteelemente in der zweiten Richtung (Y-Richtung) gilt entsprechend: Abstand von der Seitenkante des Werkstücks zur Halteposition ~ 0,22 x Breite des Werkstücks. Bei mehr als zwei Halteelementen, die an einer gemeinsamen Tragstruktur angebracht sind, die sich in Y-Richtung erstreckt, gilt obige Bedingung für die zwei den Seitenkanten benachbarten Halteelemente. Halteelemente, die ggf. zwischen den beiden äußeren Halteelementen an der gemeinsamen Tragstruktur angebracht sind, werden typischerweise in gleichen Abständen zwischen den Y-Koordinaten der beiden äußeren Halteelemente angeordnet. Beispielsweise kann ein ggf. vorhandenes drittes Halteelement mittig zwischen den Y-Koordinaten der beiden äußeren Halteelemente positioniert werden.

Bei weiter eingeschränkten Freiheitsgraden für die Festlegung der Haltepositionen oder bei beliebiger Platzierung (alle Freiheitsgrade stehen für die Wahl der Haltepositionen zur Verfügung) ist es in der Regel erforderlich, die minimal mögliche Durchbiegung des Werkstücks durch Aufstellen eines Gleichungssystems oder durch numerische Lösungsansätze zu bestimmen.

Bei einer weiteren Variante wird das Werkstück zum Entladen einer Werkzeugmaschine von einer Werkstückauflage angehoben und zu einem Ablageort transportiert oder das Werkstück wird zum Beladen der Werkzeugmaschine von einem Ablageort angehoben und zu der Werkstückauflage transportiert. Das Be- bzw. das Entladen des Werkstücks kann mittels einer Be- und/oder Entladevorrichtung erfolgen, welche die weiter oben beschriebene Haltevorrichtung umfasst. Beim Entladen des Werkstücks von der Werkzeugmaschine ist die Lagerungsebene an der Oberseite der Werkstückauflage gebildet. Beim Beladen des Werkstücks ist die Lagerungsebene an einem in der Regel in der Nähe der Werkzeugmaschine vorhandenen Ablageort gebildet, bei dem es sich beispielsweise um die Oberseite eines Stapels mit mehreren plattenförmigen Werkstücken in Form von Rohblechen handeln kann. Wie weiter oben beschrieben wurde, kann zum Transport des Werkstücks ggf. die Haltevorrichtung in mindestens eine von der Hubrichtung abweichende Richtung bewegt werden, dies ist aber nicht zwingend erforderlich, da ggf. nach dem Anheben des Werkstücks eine geeignete Transporteinrichtung bzw. ein Auflageteil einer solchen Transporteinrichtung unter dem angehobenen Werkstück platziert und das Werkstück auf dem Auflageteil abgelegt werden kann, um das Werkstück zu transportieren.

Ein weiterer Aspekt der Erfindung betrifft eine Be- und/oder Entladevorrichtung der eingangs genannten Art, bei der das erste und das zweite Halteelement an einer gemeinsamen Tragstruktur der Haltevorrichtung angebracht sind, die entlang der ersten Richtung verschiebbar ist.

Die Be- und/oder Entladevorrichtung kann insbesondere dazu dienen, das Werkstück zum Entladen einer Werkzeugmaschine von einer Werkstückauflage der Werkzeugmaschine anzuheben und zu einem Ablageort zu transportieren oder zum Beladen der Werkzeugmaschine von einem Ablageort anzuheben und zu der Werkstückauflage der Werkzeugmaschine zu transportieren. Bei der Haltevorrichtung der Be- und Entladevorrichtung können die Halteelemente einzeln angehoben und abgesenkt werden, wozu Hubeinrichtungen z.B. in Form von pneumatischen oder hydraulischen Hubzylindern verwendet werden können. Wie weiter oben beschrieben wurde, können weitere Bauteile der Be- und Entladevorrichtung für den Transport des angehobenen Werkstücks verwendet werden. Beispielsweise kann die Werkstückauflage bzw. ein Auflageteil der Werkzeugmaschine horizontal unter die Halteelemente der Haltevorrichtung verfahrbar sein.

Bei der hier beschriebenen Be- und Entladevorrichtung kann es sich insbesondere um eine Be- und Entladevorrichtung handeln, deren Aufbau in der DE 10 2016 110 542.2 beschrieben ist. Eine solche Be- und Entladevorrichtung weist eine Mehrzahl von Be- und Entlademodulen auf, die jeweils eine vertikal nach unten ausgerichtete Greifvorrichtung zum Halten eines unbearbeiteten, plattenförmigen Werkstücks umfassen und die als Halteelemente der hier beschriebenen Be- und Entladevorrichtung dienen können. Die in der DE 10 2016 110 542.2 beschriebenen Be- und Entlademodule weisen zusätzlich eine vertikal nach oben ausgerichtete Aushebevorrichtung zum Anheben eines freigetrennten Werkstückteils auf. Es versteht sich aber, dass die hier beschriebene Be- und/oder Entladevorrichtung anders als die in der DE 10 2016 110 542.2 beschriebene Be- und Entladevorrichtung ausgebildet sein kann und insbesondere keine nach oben ausgerichteten Aushebevorrichtungen aufweisen muss.

Bei einer Ausführungsform weist die Haltevorrichtung mindestens ein weiteres erstes und zweites Halteelement an einer weiteren ersten und zweiten Halteposition auf, die entlang der zweiten Richtung voneinander beabstandet und in einer ersten Richtung von dem ersten und dem zweiten Halteelement beabstandet sind, wobei die Steuerungseinrichtung ausgebildet ist, die Haltevorrichtung anzusteuern, das weitere erste Halteelement relativ zu dem weiteren zweiten Halteelement in Hubrichtung anzuheben oder umgekehrt, um unter elastischer Verformung des Werkstücks das axiale Flächenträgheitsmoment des Werkstücks in der zweiten Richtung an einem weiteren Querschnitt, welcher die weitere erste und die weitere zweite Halteposition enthält, auf mindestens das 1,5-Fache, bevorzugt auf mindestens das 3-Fache zu erhöhen. Insbesondere können das erste Halteelement und das weitere erste Halteelement entlang einer gemeinsamen, entlang der ersten Richtung verlaufenden Geraden angeordnet sein. Wird ein identischer Hub für das erste Halteelement und das weitere erste Halteelement erzeugt, kann eine entlang der ersten Richtung homogene elastische Verformung des Werkstücks erfolgen.

Bei einer weiteren Ausführungsform sind das weitere erste und das weitere zweite Halteelement an einer weiteren gemeinsamen Tragstruktur der Haltevorrichtung angebracht, die entlang der ersten Richtung verschiebbar ist.

Wie weiter oben dargestellt wurde, kann es sich bei den Tragstrukturen beispielsweise um Tragbalken handeln. Es hat sich zudem als günstig erwiesen, wenn das erste und das zweite Halteelement entlang der Tragstruktur in der zweiten Richtung verschiebbar sind. Gleiches gilt für das weitere erste und das weitere zweite Halteelement sowie für ggf. zusätzliche an den Tragstrukturen angebrachte Halteelemente. Wie weiter oben beschrieben wurde, können die Tragstrukturen insbesondere synchron in Hubrichtung angehoben werden, um das Werkstück im elastisch deformierten Zustand von der Lagerungsebene anzuheben. Für den Transport des Werkstücks in mindestens einer anderen Richtung als der Hubrichtung kann die Be- und Entladevorrichtung ggf. mindestens eine Bewegungseinrichtung aufweisen, um die Haltevorrichtung oder ggf. ein Auflageteil einer Werkstückauflage in mindestens einer von der Hubrichtung abweichenden Richtung zu bewegen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1      eine schematische Darstellung eines Beispiels einer Be- und/oder Entladevorrichtung, welche eine Haltevorrichtung mit einer Mehrzahl von Halteelementen in Form von Sauggreifelementen zum Aufsetzen auf ein Werkstück aufweist,

Fig. 2a      eine Darstellung der Haltevorrichtung von Fig. 1, bei der die Sauggreifelemente synchron angehoben werden, um ein plattenförmiges, metallisches Werkstück aus einer Lagerungsebene anzuheben,

Fig. 2b      eine Darstellung einer Haltevorrichtung, bei der zur Verringerung der Durchbiegung des Werkstücks mehrere Sauggreifelemente relativ zu anderen Sauggreifelementen angehoben werden, um das Werkstück zur Erzeugung einer U-förmigen Sicke elastisch zu verformen,

Fig. 3a,b      Darstellungen der Durchbiegung des Werkstücks beim Anheben des Werkstücks auf die in Fig. 2a bzw. auf die in Fig. 2b beschriebene Weise,

Fig. 4a,b      Darstellungen eines Querschnitts des Werkstücks mit einer U-förmigen bzw. mit einer S-förmigen Geometrie, die jeweils beim elastischen Verformen erzeugt werden, sowie

Fig. 5      eine Darstellung der Durchbiegung des Werkstücks, das an zwei in Längsrichtung beabstandeten Haltepositionen von der Haltevorrichtung gehalten wird.

In der folgenden Beschreibung der Zeichnungen werden für gleiche bzw. funktionsgleiche Bauteile identische Bezugszeichen verwendet.

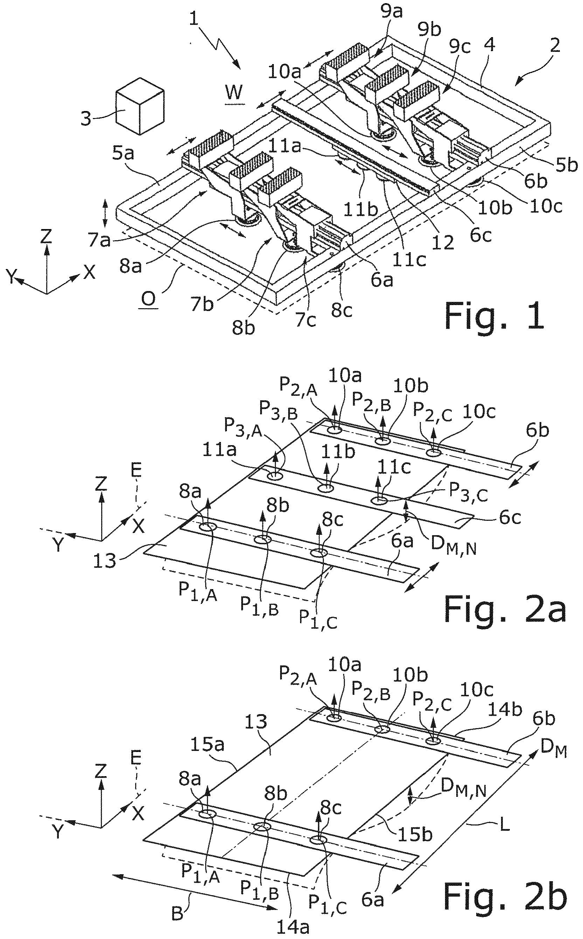

Fig. 1 zeigt eine Be- und Entladevorrichtung 1, die eine Haltevorrichtung 2 sowie eine stark schematisch dargestellte Steuerungseinrichtung 3 in Form eines Steuerungs-Computers zur Ansteuerung der Haltevorrichtung 2 aufweist. Die Haltevorrichtung 2 weist einen Tragrahmen 4 auf, der zwei sich in einer ersten Richtung (im Folgenden: X-Richtung) erstreckende Tragstreben 5a,b umfasst. Im gezeigten Beispiel weist die Haltevorrichtung 2 drei Tragbalken 6a-c auf, die sich zwischen den beiden Tragstreben 5a,b in einer zweiten, zur ersten senkrechten Richtung (im Folgenden: Y-Richtung) erstrecken. Ein erster und zweiter Tragbalken 6a,b können mit Hilfe eines nicht bildlich dargestellten Antriebes in X-Richtung an den Tragstreben 5a,b verfahren werden, wie durch Doppelpfeile angedeutet ist. Der Antrieb kann beispielsweise als Riemenantrieb ausgebildet sein, der an dem ersten und zweiten Tragbalken 6a,b angreift, wobei zwischen den beiden Tragbalken 6a,b und dem Riemenantrieb jeweils eine ansteuerbare Kupplung vorgesehen sein kann, um die Verfahrbewegung der beiden Tragbalken 6a,b individuell anzusteuern.

Der dritte, in X-Richtung zwischen dem ersten und zweiten Tragbalken 6a,b positionierte Tragbalken 6c kann entlang der Tragstreben 5a,b ebenfalls in X-Richtung verfahren werden, wie durch einen Doppelpfeil angedeutet ist. Im Gegensatz zum ersten und zweiten Tragbalken 6a,b wird der dritte Tragbalken 6c nicht angetrieben, sondern zwangsweise durch eine Bewegung des ersten und/oder des zweiten, äußeren Tragbalkens 6a,b mitbewegt.

An dem ersten Tragbalken 6a sind drei Be- und Entlademodule 7a-c angebracht, die mittels einer jeweiligen nicht bildlich dargestellten Linearführung entlang des ersten Tragbalkens 6a in Y-Richtung verfahrbar geführt sind. An den Be- und Entlademodulen 7a-c ist jeweils eine vertikal nach unten ausgerichtete Halteeinrichtung in Form eines Sauggreifers 8a-c angebracht. Die drei Sauggreifer 8a-c sind an dem jeweils zugeordneten Be- und Entlademodul 7a-c individuell in einer Hubrichtung (im Folgenden: Z-Richtung) anheb- und absenkbar angebracht. Für das Anheben und Absenken eines jeweiligen Sauggreifers 8a-c weist jedes der drei Be- und Entlademodule 7a-c einen nicht bildlich dargestellten Antrieb auf, der beispielsweise als pneumatischer Antrieb ausgebildet sein kann.

Auch der zweite Tragbalken 6b weist drei weitere Be- und Entlademodule 9a-c auf, die an dem zweiten Tragbalken 6b in Y-Richtung verschiebbar geführt sind. An den drei weiteren Be- und Entlademodulen 9a-c sind drei weitere Halteeinrichtungen angebracht, die in Form von weiteren Sauggreifern 10a-c ausgebildet sind. Auch die drei weiteren Sauggreifer 10a-c können mit Hilfe eines jeweiligen nicht bildlich dargestellten Antriebes in Z-Richtung einzeln angehoben und abgesenkt werden.

Wie in Fig. 1 ebenfalls zu erkennen ist, weist der mittlere Tragbalken 6c ebenfalls drei Halteeinrichtungen in Form von drei zusätzlichen Sauggreifern 11a-c auf. Die drei zusätzlichen Sauggreifer 11a-c sind an einem Schlitten 12 angebracht, der entlang des mittleren Tragbalkens 6c verschiebbar geführt ist. Der Schlitten 12 kann angetrieben sein, dies ist aber nicht zwingend erforderlich. Die drei an dem mittleren Tragbalken 6c angebrachten zusätzlichen Sauggreifer 11a-c können im gezeigten Beispiel nicht individuell in Z-Richtung angehoben und abgesenkt werden. Die drei zusätzlichen Sauggreifer 11a-c können jedoch gemeinsam mit den Sauggreifern 8a-c, die an dem ersten Tragbalken 6a angebracht sind, sowie mit den weiteren Sauggreifern 10a-c, die an dem zweiten Tragbalken 6b angebracht sind, angehoben und abgesenkt werden, indem der Tragrahmen 4 mit Hilfe eines nicht bildlich dargestellten Antriebs in Z-Richtung verfahren wird, wie in Fig. 1 ebenfalls durch einen Doppelpfeil angedeutet ist.

An den Be- und Entlademodulen 7a-c des ersten Tragbalkens 6a sowie an den Be- und Entlademodulen 9a-c des zweiten Tragbalkens 6b sind vertikal nach oben ausgerichtete Aushebevorrichtungen angebracht, die zum Anheben von freigetrennten Werkstückteilen dienen, die auf einer Werkstückauflage W einer Werkzeugmaschine, beispielsweise einer Laserschneidmaschine, gelagert sind, die oberhalb der Be- und Entlademodule 7a-c, 9a-c angeordnet ist. Mit Hilfe der Aushebevorrichtungen kann ein auf der Werkstückauflage W gelagertes Werkstückteil angehoben und somit von der Werkstückauflage W entladen werden. Hinsichtlich der Funktionsweise der Aushebevorrichtungen sowie von weiteren Details der hier beschriebenen Haltevorrichtung 2 der Be- und Entladevorrichtung 1 sei auf die DE 10 2016 110 542.2 verwiesen, welche durch Bezugnahme in ihrer Gesamtheit zum Inhalt dieser Anmeldung gemacht wird.

Die Be- und Entladevorrichtung 1 dient auch dazu, an einem in Fig. 1 gestrichelt dargestellten Ablageort O abgelegte Werkstücke abzuheben und zur Werkstückauflage W zu transportieren. Der Ablageort O kann beispielsweise die Oberseite eines Stapels von plattenförmigen Werkstücken in Form von Rohblechen bilden, die auf einer nicht bildlich dargestellten Rohblechpalette gestapelt sind. Nach dem Anheben eines Werkstücks 13 (vgl. Fig. 2a,b) mit Hilfe der Haltevorrichtung 2 kann ein Auflageteil der Werkstückauflage W in dem Bereich unterhalb der Be- und Entladevorrichtung 1, genauer gesagt unterhalb des angehobenen Werkstücks 13 und oberhalb des Rohblechstapels positioniert werden. Nach dem Absenken des Werkstücks 13 auf das nicht bildlich dargestellte Auflageteil kann dieses in seine Arbeitsstellung zurück bewegt werden, um seine Funktion als Auflage des Werkstücks 13 bei der Werkstückbearbeitung zu erfüllen. Für Details des Transports des Werkstücks 13 auf diese Weise sei ebenfalls auf die bereits weiter oben zitierte DE 10 2016 110 542.2 verwiesen.

Fig. 2a zeigt ein plattenförmiges Werkstück 13 in Form eines Blechs, welches in einer Lagerungsebene E gelagert ist, die mit dem Ablageort O an der Oberseite des Rohblechstapels übereinstimmt. Um das Werkstück 13 aus der Lagerungsebene E anzuheben, wird zunächst der Tragrahmen 4 auf die Oberseite des plattenförmigen Werkstücks 13 abgesenkt und die Sauggreifer 8a-c, 10a-c, 11a-c werden auf die Oberseite des Werkstücks 13 aufgesetzt. Nachfolgend werden die Sauggreifer 8a-c, 10a-c, 11a-c, die im gezeigten Beispiel als Vakuum-Sauger ausgebildet sind, aktiviert, um das Werkstück 13 anzusaugen und zu halten. Die drei Sauggreifer 8a-c des ersten Tragbalkens 6a werden hierbei an drei Haltepositionen $P_{1,A}$, $P_{1,B}$, $P_{1,C}$ (X/Y-Koordinaten) auf das Werkstück 13 abgesenkt, deren X-Koordinaten aufgrund der Anordnung der drei Sauggreifer 8a-c auf dem ersten Tragbalken 6a übereinstimmen. Entsprechend werden die drei weiteren Sauggreifer 10a-c, die an dem zweiten Tragbalken 6b angebracht sind, an drei weiteren Haltepositionen $P_{2,A}$, $P_{2,B}$, $P_{2,C}$ auf dem Werkstück 13 aufgesetzt, deren X-Koordinaten aufgrund der Anordnung der drei weiteren Sauggreifer 10a-c auf dem zweiten Tragbalken 6b ebenfalls übereinstimmen. Die an dem dritten, mittleren Tragbalken 6c angebrachten zusätzlichen Sauggreifer 11a-c werden an drei zusätzlichen Haltepositionen $P_{3,A}$, $P_{3,B}$, $P_{3,C}$ auf das Werkstück 13 aufgesetzt.

Bei dem in Fig. 2a gezeigten Beispiel wird das Werkstück 13 aus der Lagerungsebene E angehoben, indem der Tragrahmen 4 angehoben wird, wodurch alle Sauggreifer 8a-c, 10a-c, 11a-c synchron angehoben werden. Wie in Fig. 2a ebenfalls zu erkennen ist, werden hierbei die zusätzlichen Sauggreifer 11a-c benötigt, da ansonsten die in Fig. 2a gestrichelt dargestellte (maximale) Durchbiegung $D_{M,N}$ des Werkstücks 13 in Z-Richtung so groß würde, dass ein Betrieb der Be- und Entladevorrichtung 1 nicht möglich wäre.

Bei dem in Fig. 2b gezeigten Beispiel wird gezeigt, wie zur Verringerung der Durchbiegung $D_{M,N}$ des Werkstücks 13 eine elastische Verformung des Werkstücks 13 erzeugt werden kann, um auf den mittleren Tragbalken 6c verzichten und auf diese Weise die Be- und Entladevorrichtung 1 einfacher und kostengünstiger gestalten zu können. Zu diesem Zweck wird bei dem in der Lagerungsebene E befindlichen Werkstück 13 der erste Sauggreifer 8a relativ zum zweiten Sauggreifer 8b in Z-Richtung angehoben, indem der weiter oben beschriebene Antrieb aktiviert wird, d.h. es wird ein relativer Abstand (im Folgenden: Hub) h des ersten Sauggreifers 8a in Z-Richtung relativ zum zweiten Sauggreifer 8b erzeugt. Entsprechend wird auch der dritte Sauggreifer 8c relativ zum zweiten Sauggreifer 8b angehoben, d.h. es wird ein Hub h des dritten Sauggreifers 8c relativ zum zweiten, nicht angehobenen Sauggreifer 8b erzeugt, wie in Fig. 2b jeweils durch einen Pfeil in Z-Richtung angedeutet ist. Auch der weitere erste Sauggreifer 10a und der weitere dritte Sauggreifer 10c werden relativ zum weiteren zweiten Sauggreifer 10b um denselben Betrag angehoben, d.h. es wird derselbe relative Abstand bzw. Hub h erzeugt.

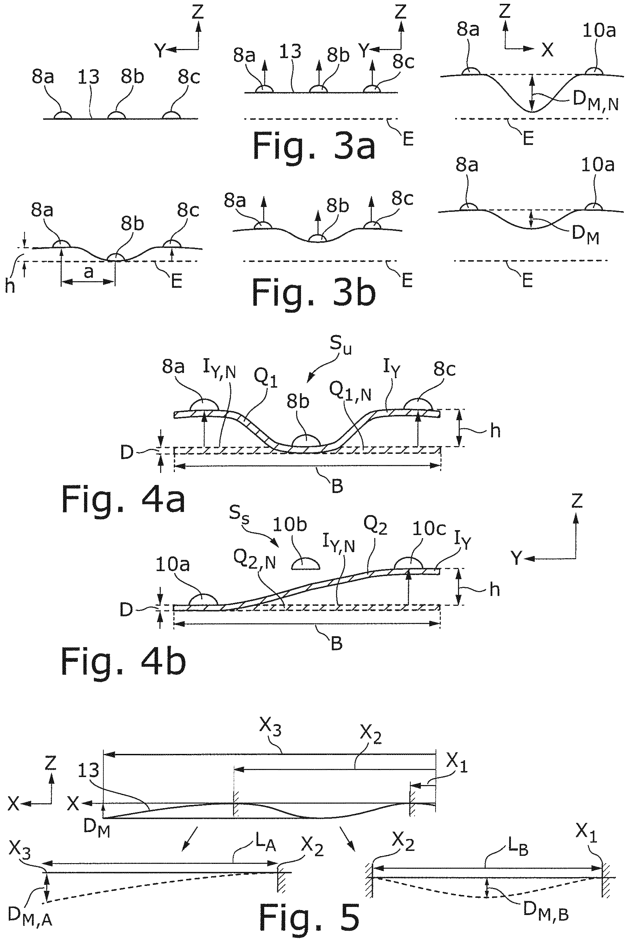

In Fig. 3a und in Fig. 3b sind Schnittdarstellungen des von der Be- und Entladevorrichtung 1 gemäß Fig. 2b aufgenommenen Werkstücks 13 in der YZ-Ebene sowie in der XZ-Ebene gezeigt. Wie durch einen Vergleich der Darstellungen von Fig. 3a und von Fig. 3b jeweils auf der rechten Seite erkennbar ist, entsteht beim Anheben eines nicht elastisch deformierten Werkstücks 13 eine erhebliche Durchbiegung $D_{M,N}$ des Werkstücks 13 in Z-Richtung, die sich entlang der X-Richtung erstreckt, während die Durchbiegung $D_M$ des elastisch deformierten Werkstücks 13 entlang der X-Richtung deutlich reduziert ist. Das elastisch deformierte Werkstück 13 kann daher aus der Lagerungsebene E angehoben werden, ohne dass zu diesem Zweck ein dritter Tragbalken 6c benötigt wird,.

Fig. 3b zeigt den durch das Erzeugen des Hubs h in Y-Richtung hervorgerufenen, U-förmig gekrümmten Querschnitt des Werkstücks 13 in Y-Richtung entlang der Mitte des ersten Tragbalkens 6a. Ein entsprechend U-förmig gekrümmter weiterer Querschnitt wird entlang des zweiten Tragbalkens 6b erzeugt. Da die beiden sich in Y-Richtung erstreckenden Seitenkanten 14a, 14b des Werkstücks 13 einen vergleichsweise kleinen Abstand in X-Richtung zu den beiden Tragbalken 6a,b aufweisen, bildet sich eine entsprechende U-förmige Querschnittsgeometrie auch entlang der beiden kurzen Seitenkanten 14a,b des Werkstücks 13 aus, die sich in Y-Richtung erstrecken. Aufgrund des ebenfalls nicht zu großen Abstandes zwischen den beiden Tragbalken 6a,b in X-Richtung weist das rechteckige Werkstück 13 entlang seiner gesamten Erstreckung L in Längsrichtung, die im gezeigten Beispiel mit der X-Richtung übereinstimmt, einen U-förmig gekrümmten Querschnitt in Y-Richtung auf. Anders ausgedrückt ist in dem Werkstück 13 eine sich in X-Richtung entlang der gesamten Längsausdehnung L des Werkstücks 13 erstreckende U-förmige "elastische" Sicke gebildet.

Um nachvollziehen zu können, weshalb sich die Durchbiegung $D_M$ des Werkstücks 13 entlang der X-Richtung signifikant reduziert, wenn der erste Sauggreifer 8a und der dritte Sauggreifer 8c relativ zum zweiten Sauggreifer 8b um den Hub h angehoben werden, sind in Fig. 4a der U-förmig gekrümmte Querschnitt $Q_1$ des elastisch deformierten Werkstücks 13, welcher die drei Haltepositionen $P_{1,A}$, $P_{1,B}$, $P_{1,C}$ enthält, sowie der rechteckige Querschnitt $Q_{1,N}$ des nicht elastisch deformierten Werkstücks 13 dargestellt.

Für das axiale Flächenträgheitsmoment $I_{Y,N}$ in Y-Richtung des in Fig. 4a gezeigten rechteckigen Querschnitts $Q_{1,N}$ mit der Breite B und der Dicke D des Werkstücks 13 gilt: $I_{Y,N} = B\,D^2/12$. Das axiale Flächenträgheitsmoment $I_Y$ in Y-Richtung des in Fig. 4a gezeigten U-förmig gekrümmten Querschnitts $Q_1$ kann gemäß nachfolgender Formel bestimmt werden:

$$I_y = \int_A z^2\ \mathrm{d}A\ ,$$

wobei A die Querschnittsfläche des U-förmig gekrümmten Querschnitts $Q_1$ bezeichnet.

Das axiale Flächenträgheitsmoment $I_Y$ in Y-Richtung des in Fig. 4a gezeigten gekrümmten Querschnitts $Q_1$ des Werkstücks 13 kann abhängig vom Hub h auf mindestens das 1,5-Fache, ggf. auf mindestens das 3-Fache gegenüber dem axialen Flächenträgheitsmoment $I_{Y,N}$ in Y-Richtung des ebenfalls in Fig. 4a gezeigten Querschnitts $Q_{1,N}$ des nicht elastisch deformierten Werkstücks 13 erhöht werden.

An einem weiteren, in Fig. 4a nicht bildlich dargestellten Querschnitt $Q_2$ des Werkstücks 13 in der YZ-Ebene, der die drei weiteren Haltepositionen $P_{2,A}$, $P_{2,B}$, $P_{2,C}$ enthält, d.h. der sich in Y-Richtung entlang der Mitte des zweiten Tragbalkens 6b erstreckt, wird das Werkstück 13 ebenfalls U-förmig deformiert, d.h. der weitere Querschnitt $Q_2$ weist ebenfalls eine U-förmige Geometrie auf, die mit derjenigen an dem Querschnitt $Q_1$ in Y-Richtung entlang des ersten Tragbalkens 6a übereinstimmt. Auf diese Weise wird an dem Werkstück 13 eine U-förmige Sicke Su gebildet, die sich in Längsrichtung des gesamten Werkstücks 13 (in X-Richtung) erstreckt. Auch die beiden kurzen Seitenkanten 14a,b des Werkstücks 13, genauer gesagt die Querschnitte an den beiden kurzen Seitenkanten 14a,b weisen daher die in Fig. 4a gezeigte U-förmige Querschnittsgeometrie auf.

An Stelle der in Fig. 4a gezeigten U-förmigen Querschnitts $Q_1$ kann das axiale Flächenträgheitsmoment $I_Y$ des Werkstücks 13 in Y-Richtung auch erhöht werden, indem das Werkstück 13 auf andere Weise elastisch deformiert wird, beispielsweise indem ein in Fig. 4b gezeigter Querschnitt $Q_2$ mit einer S-förmigen Geometrie erzeugt wird. Der S-förmige Querschnitt $Q_2$ verläuft entlang der Mitte des zweiten Tragbalkens 6b, wobei zu dessen Erzeugung der dritte weitere Sauggreifer 10c relativ zum ersten weiteren Sauggreifer 10a angehoben wird. Der zweite weitere Sauggreifer 10b wird bei dem in Fig. 4b gezeigten Beispiel nicht zum Halten des Werkstücks 13 verwendet, kann aber alternativ verwendet werden, indem er zuvor kraftlos auf dem Werkstück 13 aufgesetzt wird.

Durch eine entsprechende elastische Verformung an einem in Fig. 4b nicht gezeigten Querschnitt $Q_1$, der entlang des ersten Tragbalkens 6a verläuft, kann entlang der gesamten Erstreckung L des Werkstücks 13 in X-Richtung ein S-förmiger Querschnitt in Y-Richtung erzeugt werden, d.h. es wird eine S-förmige Sicke Ss in dem Werkstück 13 gebildet. Auch durch eine solche S-förmige Sicke Ss lässt sich das axiale Flächenträgheitsmoment $I_Y$ des Werkstücks 13 in Y-Richtung gegenüber dem axialen Flächenträgheitsmoment $I_{Y,N}$ des nicht elastisch deformierten Werkstücks 13 auf mindestens das 1,5-Fache, ggf. auf mindestens das 3-Fache erhöhen.

Um zu erreichen, dass die Durchbiegung $D_M$ des elastisch verformten Werkstücks 13 insgesamt, d.h. sowohl entlang der X-Richtung als auch entlang der Y-Richtung abnimmt, darf der relative Abstand bzw. Hub h des ersten und dritten Sauggreifers 8a, 8c zum zweiten Sauggreifer 8b und somit die Durchbiegung des elastisch verformten Werkstücks 13 entlang der Y-Richtung nicht größer sein als die Durchbiegung $D_{M,N}$ entlang der X-Richtung des nicht elastisch verformten Werkstücks 13. Auch ist es erforderlich, dass bei der Verformung des metallischen Werkstücks 13 die Streckgrenze des metallischen Werkstückmaterials nicht überschritten wird, um zu verhindern, dass an Stelle einer elastischen Verformung eine dauerhafte plastische Verformung des Werkstücks 13 erzeugt wird.

Nachfolgend wird beispielhaft für die in Fig. 4a gezeigte Verformung zur Erzeugung einer U-förmigen Querschnittsgeometrie $Q_1$ und für die in Fig. 4b gezeigte Verformung zur Erzeugung einer S-förmigen Querschnittsgeometrie $Q_2$ unter vereinfachenden Annahmen die in das Werkstück 13 eingebrachte Spannung bestimmt:
Eine U-förmige Sicke Su bzw. eine Querschnittsgeometrie $Q_1$, wie sie in Fig. 4a gezeigt ist, kann vereinfacht durch einen beidseitig eingespannten Biegebalken angenähert werden, der durch eine vertikale Verschiebung (Hub h) in der Mitte des Balkens belastet wird.

Für die in das Werkstück 13 eingebrachte Spannung $\sigma_B$ ergibt sich in diesem Fall:

$$\sigma_B = (12\ h\ D\ E)\ /\ a^2.$$

wobei D die Dicke des Werkstücks, E das Elastizitätsmodul des Werkstückmaterials und a den Abstand in Y-Richtung (vgl. Fig. 3b) zwischen der ersten und der zweiten Halteposition $P_{1,A}$, $P_{1,B}$ bezeichnet.

Eine S-förmige Sicke Ss bzw. eine S-förmige Querschnittsgeometrie $Q_2$, wie sie in Fig. 4b gezeigt ist, kann vereinfacht durch einen einseitig eingespannten Biegebalken angenähert werden, der durch eine vertikale Verschiebung (Hub h) belastet wird. Wird vereinfachend die Mechanik der Haltevorrichtung 2 bzw. der Be- und Entladevorrichtung 1 als ideal steif angenommen, so gilt für die in das Werkstück 13 eingebrachte Spannung $\sigma_B$:

$$\sigma_B = (2\ h\ D\ E)\ /\ a^2,$$

wobei D die Dicke des Werkstücks, E das Elastizitätsmodul des Werkstückmaterials und a den Abstand zwischen der ersten Halteposition $P_{1,A}$ und der dritten Halteposition $P_{1,C}$ bezeichnet.

Der Abstand a zwischen den Haltepositionen $P_{1,A}$, $P_{1,B}$ bzw. $P_{1,C}$, $P_{1,A}$ und der Hub h in Hubrichtung Z beeinflussen somit die in das Werkstück 13 eingebrachte Spannung $\sigma_B$. Beide Größen können daher so gewählt bzw. so aufeinander abgestimmt werden, dass die Streckgrenze $\sigma_Y$ des Werkstücks nicht überschritten wird, d.h. dass gilt: $\sigma_B < \sigma_Y$.

Bei der Verwendung von Stahl als Material des Werkstücks 13 kann diese Bedingung in der Regel eingehalten werden, wenn der Hub h in Hubrichtung Z zwischen zwei benachbarten, relativ zueinander angehobenen Halteelementen 8a, 8b bzw. 8a, 8c nicht größer gewählt wird als ein Drittel des Abstands a zwischen den jeweiligen relativ zueinander angehobenen Halteelementen 8a, 8b bzw. 8c, 8a.

Unabhängig davon, ob durch die elastische Verformung das axiale Flächenträgheitsmoment $I_Y$ des Werkstücks 13 in Y-Richtung erhöht wird oder nicht, können die (identische) X-Koordinate $X_1$ der Haltepositionen

$P_{1,A}$, $P_{1,B}$, $P_{1,C}$ der an dem ersten Tragbalken 6a angebrachten Halteelemente 8a-c und die (identische) X-Koordinate $X_2$ der Haltepositionen $P_{2,A}$, $P_{2,B}$, $P_{2,C}$ der an dem zweiten Tragbalken 6b angebrachten Halteelemente 10a-c so gewählt werden, dass die Durchbiegung $D_M$ des Werkstücks 13 entlang der X-Richtung minimiert wird, wie nahfolgend beispielhaft unter vereinfachenden Annahmen anhand von Fig. 5 beschrieben wird.

Geht man davon aus, dass die X-Koordinate $X_1$ der ersten drei Halteelemente 8a-c einen vergleichsweise geringen Abstand zu einer benachbarten Stirnseite 14a des Werkstücks 13 aufweist, ist die Durchbiegung des Werkstücks 13 in diesem Bereich bzw. auf dieser Länge vernachlässigbar. Wird davon ausgegangen, dass diese X-Koordinate $X_1$ fest vorgegeben ist, kann die Durchbiegung $D_M$ des Werkstücks 13 durch zwei einfache Biegebalkenmodelle angenähert werden, indem die verbleibende Länge des Werkstücks 13 in X-Richtung auf eine erste und zweite Länge $L_A$, $L_B$ aufgeteilt wird, die in Summe annähernd mit der Gesamtlänge L des Werkstücks 13 übereinstimmen.

Entlang der ersten Länge $L_A$ wird das Werkstück 13 als einseitig an der X-Koordinate $X_2$ der weiteren Halteelemente 10a-c bzw. des zweiten Tragbalkens 6b eingespannter Biegebalken angesehen, dessen freies Ende, welches der Position einer der kurzen Seitenkanten 14b des Werkstücks 13 entspricht, an einer in Fig. 5 ebenfalls dargestellten dritten X-Koordinate $X_3$ positioniert ist, d.h. es gilt: $L_A = X_3 - X_2$ (Fall A).

Bei der Belastung mit einer Streckenlast $F_L$, welche dem Eigengewicht des Werkstücks 13 entspricht, ergibt sich für die Durchbiegung $D_M$ in Fall A:

$$D_{M,A} = F_L \, L_A^4 \, / \, ( \, 8 \, E \, I_y \, ),$$

wobei $I_Y$ das axiale Flächenträgheitsmoment des Werkstücks 13 in Y-Richtung (s.o.) und E das Elastizitätsmodul des Werkstückmaterials bezeichnen.

Auf der zweiten Länge $L_B$ zwischen der X-Koordinate $X_1$ des ersten Tragbalkens 6a und der X-Koordinate $X_2$ des zweiten Tragbalkens 6b ($L_B = X_2 - X_1$) wird das Werkstück 13 als beidseitig eingespannter Biegebalken angenähert, wobei die beiden X-Koordinaten $X_1$, $X_2$ mit den Positionen der Auflager des Biegebalkens identifiziert werden. In diesem Fall ergibt sich für die maximale Durchbiegung $D_{M,B}$ folgende Formel:

$$D_{M,B} = F_L \, L_B^4 \, / \, ( \, 384 \, E \, I_y \, ),$$

wobei $L_B$ den Abstand zwischen den beiden Auflagern des Biegebalkens (s.o.), $I_Y$ das Flächenträgheitsmoment des Werkstücks in der zweiten Richtung (Y-Richtung) und E das Elastizitätsmodul des Werkstückmaterials bezeichnen.

Insgesamt wird die Durchbiegung des Werkstücks 13 entlang der X-Richtung minimiert, wenn die Durchbiegung $D_{M,A}$ bzw. $D_{M,B}$ in beiden Fällen gleich groß ist ($D_{M,A} = D_{M,B}$), d.h. wenn gilt:

$$L_A^4 = L_B^4 \, / \, 48.$$

Die Durchbiegung $D_{M,A}$ bzw. $D_{M,B}$ des Werkstücks 13 ist in beiden Fällen antiproportional zum axialen Flächenträgheitsmoment $I_Y$ in Y-Richtung, welches durch die Veränderung der Querschnittsgeometrie des Werkstücks 13 aufgrund der elastischen Verformung erhöht wurde, wie dies weiter oben näher beschrieben ist.

Für den Fall, dass die X-Koordinaten $X_1$, $X_2$ beider Tragbalken 6a, 6b in X-Richtung frei gewählt werden können, können als X-Koordinaten $X_1$, $X_2$ der beiden Tragbalken 6a, 6b die Bessel-Punkte verwendet werden. Für die jeweilige Koordinate $X_1$, $X_2$ in X-Richtung gilt in diesem Fall, dass der Abstand von der jeweils benachbarten Seitenkante 14a, 14b in X-Richtung des Werkstücks 13 zur jeweiligen X-Koordinate $X_1$, $X_2$ zwischen 0,20 und 0,24 x L, d.h. bei ungefähr 0,22 x L liegt, wobei L die Länge des Werkstücks 13 bezeichnet.

Die beiden Y-Koordinaten der ersten Halteposition $P_{1,A}$, und der weiteren ersten Halteposition $P_{2,A}$ in Y-Richtung können ebenfalls übereinstimmend mit den beiden Bessel-Punkten gewählt werden, d.h. von der jeweils benachbarten Seitenkante 15a des Werkstücks 13 in Y-Richtung in einem Abstand zwischen 0,20 x B und 0,24 x B bzw. von ca. 0,22 x B beabstandet sein, wobei B die Breite des Werkstücks 13 bezeichnet (vgl. Fig. 2b). Gleiches gilt für die Y-Koordinaten der zweiten bzw. der weiteren zweiten Halteposition $P_{1,B}$, $P_{2,B}$ in Y-Richtung zur benachbarten Seitenkante 15b des Werkstücks 13 in Y-Richtung, wenn nur zwei Haltelemente 8a,b bzw. zwei weitere Halteelemente 10a,b an jedem Tragbalken 6a, 6b angeordnet sind.

Für den in Fig. 2b gezeigten Fall, bei dem drei Halteelemente 8a-c an dem ersten Tragbalken 6a und drei weitere Halteelemente 10a-c an dem zweiten Tragbalken 6b angebracht sind, stimmt die Y-Koordinate der Halteposition $P_{1,C}$ des dritten Halteelements 8c bzw. die Y-Koordinate der Halteposition $P_{2,C}$ des dritten weiteren Halteelements 10c mit dem jeweiligen Bessel-Punkt überein. Das zweite Halteelement 8b bzw. das weitere zweite Halteelement 10b kann in diesem Fall mittig zwischen den beiden äußeren Halteelementen 8a, 8c bzw. den beiden äußeren weiteren Halteelementen 10a, 10c angeordnet werden. Voraussetzung dafür ist, dass bei dieser Positionierung der Halteelemente 8a-c bzw. der weiteren Halteelemente 10a-c der Abstand a zwischen den Y-Koordinaten von jeweils benachbarten Haltepositionen $P_{1,A}$, $P_{1,B}$, $P_{1,C}$ bzw. $P_{2,A}$, $P_{2,B}$, $P_{2,C}$ entlang der Y-Richtung und der Hub h in Hubrichtung Z so gewählt werden können, dass die durch die Verformung in das Werkstück 13 eingebrachte Spannung $\sigma_B$ unter der Streckgrenze $\sigma_Y$ des Werkstücks 13 bleibt, d.h. dass gilt: $\sigma_B < \sigma_Y$.

Für die Durchführung des weiter oben beschriebenen Verfahrens, bei dem das metallische Werkstück 13 elastisch deformiert wird, kann ein NC-Programm auf der Steuereinrichtung 3 der Be- und Entladevorrichtung 1 abgearbeitet werden. Wie weiter oben beschrieben wurde, kann auf diese Weise die Durchbiegung $D_M$ des Werkstücks 13 beim Anheben sowie ggf. während des Transports des Werkstücks 13 verringert werden. Es versteht sich, dass das weiter oben beschriebene Verfahren zum elastischen Deformieren des Werkstücks 13 nicht nur mit Hilfe der in Fig. 1 gezeigten Haltevorrichtung 2 bzw. der Be- und Entladevorrichtung 1 durchgeführt werden kann, sondern mit Hilfe von beliebigen anderen Haltevorrichtungen 2, welche die Erzeugung eines relativen Hubes h zwischen Halteelementen ermöglichen. Es versteht sich weiterhin, dass insbesondere beim Anheben von Werkstücken, die ein Restgitter bilden, aus dem bereits Werkstückteile ausgeschnitten wurden, ggf. die X-Richtung und die Y-Richtung vertauscht werden können, so dass eine gekrümmte Querschnittsgeometrie des Werkstücks 13 nicht in Y-Richtung, sondern in X-Richtung erzeugt wird.

**Patentansprüche**

1. Verfahren zum Anheben eines plattenförmigen metallischen Werkstücks (13) mittels einer Haltevorrichtung (2), insbesondere mittels einer Greif- oder Sauggreifvorrichtung, umfassend:

   Aufsetzen einer Mehrzahl von Halteelementen (8a-c, 10a-c), insbesondere von Greif- oder Sauggreifelementen, der Haltevorrichtung (2) auf das in einer Lagerungsebene (E) gelagerte Werkstück (13) und Halten des Werkstücks (13) an einer Mehrzahl von den Halteelementen (8a-c, 10a-c) zugehörigen Haltepositionen ($P_{1,A}$, $P_{1,B}$, $P_{1,C}$; $P_{2,A}$, $P_{2,B}$, $P_{2,C}$), wobei mindestens ein erstes und ein zweites Halteelement (8a, 8b) an mindestens einer ersten und einer zweiten Halteposition ($P_{1,A}$, $P_{1,B}$) entlang einer zweiten Richtung (Y) voneinander beabstandet sind, sowie Anheben des Werkstücks (13) aus der Lagerungsebene (E) mittels der Haltevorrichtung (2),
   Elastisches Verformen des Werkstücks (13) durch Anheben des ersten Halteelements (8a) relativ zum zweiten Halteelement (8b) oder des zweiten Halteelements (8b) relativ zum ersten Haltelement (8a) in einer Hubrichtung (Z) senkrecht zur Lagerungsebene (E), wobei beim elastischen Verformen das axiale Flächenträgheitsmoment ($I_Y$) des Werkstücks (13) in der zweiten Richtung (Y) an einem Querschnitt ($Q_1$) des Werkstücks (13), welcher die erste und die zweite Halteposition ($P_{1,A}$, $P_{1,BA}$) enthält, auf mindestens das 1,5-Fache erhöht wird, um die Durchbiegung ($D_M$) des angehobenen Werkstücks (13) entlang einer ersten Richtung (X), die bevorzugt senkrecht zur zweiten Richtung (Y) verläuft, zu verringern,
   **dadurch gekennzeichnet,**
   **dass** das erste und das zweite Halteelement (8a, 8b; 8c, 8a) an einer gemeinsamen Tragstruktur (6a) der Haltevorrichtung (2) angebracht sind, die entlang der ersten Richtung (X) verschiebbar ist.

2. Verfahren nach Anspruch 1, bei dem die Haltevorrichtung (2) ein weiteres erstes und zweites Halteelement (10a, 10b) aufweist, die an mindestens einer weiteren ersten und zweiten Halteposition ($P_{2,A}$; $P_{2,B}$) entlang der zweiten Richtung (Y) voneinander beabstandet und in der ersten Richtung (X) von dem ersten und dem zweiten Halteelement (8a, 8b) beabstandet sind, wobei das elastische Verformen des Werkstücks (13) das Anheben des ersten weiteren Halteelements (10a) relativ zum zweiten weiteren Halteelement (10b) oder des zweiten Halteelements (8b) relativ zum ersten Haltelement (8a) in einer Hubrichtung (Z) senkrecht zur Lagerungsebene (E) umfasst, und wobei beim elastischen Verformen das axiale Flächenträgheitsmoment ($I_Y$) des Werkstücks (13) in der zweiten Richtung (Y) an einem weiteren Flächenquerschnitt ($Q_2$) des Werkstücks (13), welcher die weitere erste und die weitere zweite Halteposition ($P_{2,A}$, $P_{2,B}$) enthält, auf mindestens das 1,5-Fache erhöht wird, wobei bevorzugt das weitere erste und das weitere zweite Halteelement (10a, 10b; 10c, 10a) an einer weiteren gemeinsamen Tragstruktur (6b) der Haltevorrichtung (2) angebracht sind, die entlang der ersten Richtung (X) verschiebbar ist.

3. Verfahren nach Anspruch 1 oder 2, bei dem durch das elastische Verformen an mindestens einer Seitenkante (14a, 14b) des Werkstücks (13) eine von einer Geraden abweichende, gekrümmte Querschnittsgeometrie ($Q_1$, $Q_2$) erzeugt wird.

4. Verfahren nach einem der vorhergehenden Ansprüche, bei dem durch das elastische Verformen an den beiden Seitenkanten (14a, 14b) des Werkstücks (13), die parallel zur zweiten Richtung (Y) verlaufen, eine von einer Gerade abweichende, gekrümmte Querschnittsgeometrie ($Q_1$, $Q_2$) erzeugt wird, wobei sich die zweite Richtung (Y) bevorzugt quer zu einer Richtung (X) der maximalen Ausdehnung (L) des Werkstücks (13) erstreckt.

5. Verfahren nach einem der vorhergehenden Ansprüche, bei dem beim elastischen Verformen des Werkstücks (13) das erste Halteelement (8a) und ein drittes Halteelement (8c), welches entlang der zweiten Richtung (Y) auf der dem ersten Halteelement (8a) gegenüberliegenden Seite des zweiten Halteelements (8b) angeordnet ist, relativ zum zweiten Halteelement (8b) angehoben werden, oder umgekehrt.

6. Verfahren nach einem der vorhergehenden Ansprüche, bei dem durch das elastische Verformen in dem Werkstück (13) eine S-förmige oder eine U-förmige Sicke (Su, Ss) gebildet wird, die sich bevorzugt in einer Richtung (X) der maximalen Ausdehnung (L) des Werkstücks (13) erstreckt.

7. Verfahren nach einem der vorhergehenden Ansprüche, bei dem zum elastischen Verformen ein Abstand (h) in Hubrichtung (Z) zwischen dem ersten und dem zweiten Halteelement (8a, 8b) nicht größer gewählt wird als ein Drittel des Abstands (a) in der zweiten Richtung (Y) zwischen dem ersten und dem zweiten Halteelement (8a, 8b).

8. Verfahren nach einem der vorhergehenden Ansprüche, bei dem der relative Abstand (h) der Halteelemente (8a-c) in Hubrichtung (Z) beim elastischen Verformen kleiner gewählt wird als eine Durchbiegung ($D_M$) des angehobenen, nicht elastisch verformten Werkstücks (13) entlang der ersten Richtung (X).

9. Verfahren nach einem der vorhergehenden Ansprüche, bei dem das erste oder das zweite Halteelement (8a, 8b) und/oder das weitere erste oder das weitere zweite Halteelement (10a, 10b) in Hubrichtung (Z) angehoben werden, bevor das Werkstück (13) aus der Lagerungsebene (E) angehoben wird.

10. Verfahren nach einem der vorhergehenden Ansprüche, bei dem die Haltepositionen ($P_{1,A}$, $P_{1,B}$, $P_{1,C}$) der Haltelemente (8a-c) und/oder die weiteren Haltepositionen ($P_{2,A}$, $P_{2,B}$, $P_{2,C}$) der weiteren Halteelemente (10a-c) relativ zum Werkstück (13) in der ersten Richtung (X) und/oder in der zweiten Richtung (Y) derart gewählt werden, dass eine Durchbiegung ($D_M$) des angehobenen Werkstücks (13) minimiert wird.

11. Verfahren nach Anspruch 10, bei dem eine Koordinate ($X_1$) mindestens einer Halteposition ($P_{1,A}$, $P_{1,B}$, $P_{1,C}$) in der ersten Richtung (X) und/oder eine Koordinate ($X_2$) mindestens einer weiteren Halteposition ($P_{2,A}$, $P_{2,B}$, $P_{2,C}$) in der ersten Richtung (X) einen Abstand von einer jeweils benachbarten Seitenkante (14a, 14b) des Werkstücks (13) aufweist, der zwischen 0,20 L und 0,24 L liegt, wobei L die Ausdehnung des Werkstücks (13) in der ersten Richtung (X) bezeichnet.

12. Verfahren nach Anspruch 10 oder 11, bei dem eine Koordinate mindestens einer Halteposition ($P_{1,A}$, $P_{1,C}$) in der zweiten Richtung (Y) und/oder eine Koordinate mindestens einer weiteren Halteposition ($P_{2,A}$, $P_{2,C}$) in der zweiten Richtung (Y) einen Abstand zu einer jeweils benachbarten Seitenkante (15a, 15b) des Werkstücks (13) aufweist, der zwischen 0,20 B und 0,24 B liegt, wobei B die Ausdehnung des Werkstücks (13) in der zweiten Richtung (Y) bezeichnet.

13. Verfahren nach einem der vorhergehenden Ansprüche, bei dem das Werkstück (13) zum Entladen von einer Werkstückauflage (W) angehoben und zu einem Ablageort (O) transportiert wird oder bei dem das Werkstück (13) zum Beladen der Werkstückauflage (W) von einem Ablageort (O) angehoben und zu der Werkstückauflage (W) transportiert wird.

14. Be- und/oder Entladevorrichtung (1) zum Anheben eines plattenförmigen metallischen Werkstücks (13), umfassend:

    eine Haltevorrichtung (2), insbesondere eine Greif- oder eine Sauggreifvorrichtung, die eine Mehrzahl von Halteelementen (8a-c, 10a-c), insbesondere von Greif- oder von Sauggreifelementen, aufweist, wobei die Halteelemente (8a-c, 10a-c) in einer Hubrichtung (Z) relativ zueinander anheb- und absenkbar sind,
    eine Steuerungseinrichtung (3), die ausgebildet ist, die Haltevorrichtung (2) anzusteuern, die Mehrzahl von Halteelementen (8a-c, 10a-c) auf einem in einer Lagerungsebene (E) gelagerten Werkstück (13) aufzusetzen und an einer Mehrzahl von den Halteelementen (8a-c, 10a-c) zugehörigen Haltepositionen ($P_{1,A}$, $P_{1,B}$, $P_{1,C}$; $P_{2,A}$, $P_{2,B}$, $P_{2,C}$) zu halten, wobei mindestens ein erstes und zweites Halteelement (8a, 8b; 8c, 8a) an einer ersten und einer zweiten Halteposition ($P_{1,A}$, $P_{1,B}$; $P_{1,C}$, $P_{1,A}$) entlang einer zweiten Richtung (Y) voneinander beabstandet sind, wobei
    die Steuerungseinrichtung (3) ausgebildet ist, zur Verringerung der Durchbiegung ($D_M$) des angehobenen Werkstücks (13) die Haltevorrichtung (2) anzusteuern,
    das erste Halteelement (8a; 8c) relativ zu dem zweiten Halteelement (8b; 8a) in einer Hubrichtung (Z) senkrecht zu einer Lagerungsebene (E) des Werkstücks (13) anzuheben oder umgekehrt, um unter elastischer Verformung des Werkstücks (13) das axiale Flächenträgheitsmoment ($I_Y$) des Werkstücks (13) in der zweiten Richtung (Y) an einem Querschnitt ($Q_1$), welcher die erste und die zweite Halteposition (8a, 8b) enthält, auf mindestens das 1,5-Fache zu erhöhen,
    **dadurch gekennzeichnet,**
    **dass** das erste und das zweite Halteelement (8a, 8b; 8c, 8a) an einer gemeinsamen Tragstruktur (6a) der Haltevorrichtung (2) angebracht sind, die entlang der ersten Richtung (X) verschiebbar ist.

**15.** Be- und/oder Entladevorrichtung nach Anspruch 14, bei welcher die Haltevorrichtung (2) mindestens ein weiteres erstes und zweites Halteelement (10a, 10b; 10c, 10a) an mindestens einer weiteren ersten und zweiten Halteposition ($P_{2,A}$, $P_{2,B}$; $P_{2,C}$, $P_{2,A}$) aufweist, die entlang der zweiten Richtung (Y) voneinander beabstandet und in einer ersten Richtung (X) von dem ersten und dem zweiten Halteelement (8a, 8b; 8c, 8a) beabstandet sind, wobei die Steuerungseinrichtung (3) ausgebildet ist, die Haltevorrichtung (2) anzusteuern, das weitere erste Halteelement (10a; 10c) relativ zu dem weiteren zweiten Halteelement (10b; 10a) in Hubrichtung (Z) anzuheben oder umgekehrt, um unter elastischer Verformung des Werkstücks (13) das axiale Flächenträgheitsmoment ($I_Y$) des Werkstücks (13) in der zweiten Richtung (Y) an einem weiteren Querschnitt ($Q_2$), welcher die weitere erste und die weitere zweite Halteposition ($P_{2,A}$, $P_{2,B}$; $P_{2,C}$, $P_{2,A}$) enthält, auf mindestens das 1,5-Fache zu erhöhen.

**16.** Be- und/oder Entladevorrichtung nach Anspruch 15, bei welcher das weitere erste und das weitere zweite Halteelement (10a, 10b; 10c, 10a) an einer weiteren gemeinsamen Tragstruktur (6b) der Haltevorrichtung (2) angebracht sind, die entlang der ersten Richtung (X) verschiebbar ist.

## Claims

**1.** Method for lifting a plate-shaped metallic workpiece (13) by means of a holding device (2), in particular by means of a gripping or suction gripping device, comprising:

setting down a plurality of holding elements (8a-c, 10a-c), in particular gripping or suction gripping elements, of the holding device (2) on the workpiece (13) stored in a storage plane (E) and holding the workpiece (13) at a plurality of holding positions ($P_{1,A}$, $P_{1,B}$, $P_{1,C}$; $P_{2,A}$, $P_{2,B}$, $P_{2,C}$) associated with the holding elements (8a-c, 10a-c), wherein at least a first and a second holding element (8a, 8b) are spaced apart from one another along a second direction (Y) at at least one first and one second holding position ($P_{1,A}$, $P_{1,B}$), and

lifting the workpiece (13) from the storage plane (E) by means of the holding device (2), elastically deforming the workpiece (13) by lifting the first holding element (8a) relative to the second holding element (8b) or the second holding element (8b) relative to the first holding element (8a) in a lifting direction (Z) perpendicular to the storage plane (E), wherein, on elastic deformation, the axial area moment of inertia ($I_Y$) of the workpiece (13) in the second direction (Y) at a cross-section ($Q_1$) of the workpiece (13) which contains the first and the second holding positions ($P_{1,A}$, $P_{1,BA}$) is increased to at least 1.5 times in order to reduce the deflection ($D_M$) of the lifted workpiece (13) along a first direction (X), which preferably runs perpendicular to the second direction (Y),

**characterised in that**

the first and the second holding elements (8a, 8b; 8c, 8a) are attached to a common support structure (6a) of the holding device (2), which is displaceable along the first direction (X).

**2.** Method according to Claim 1, in which the holding device (2) has a further first and second holding element (10a, 10b) which are spaced apart from one another along the second direction (Y) at at least one further first and second holding position ($P_{2,A}$; $P_{2,B}$) and are spaced from the first and second holding elements (8a, 8b) in the first direction (X), wherein elastic deformation of the workpiece (13) comprises lifting of the first further holding element (10a) relative to the second further holding element (10b) or of the second holding element (8b) relative to the first holding element (8a) in a lifting direction (Z) perpendicular to the storage plane (E), and wherein, on elastic deformation, the axial area moment of inertia ($I_Y$) of the workpiece (13) in the second direction (Y) at a further surface cross-section ($Q_2$) of the workpiece (13) which contains the further first and the further second holding positions ($P_{2,A}$, $P_{2,B}$) is increased to at least 1.5 times, wherein the further first and the further second holding elements (10a, 10b; 10c, 10a) are preferably attached to a further common support structure (6b) of the holding device (2), which is displaceable along the first direction (X).

**3.** Method according to Claim 1 or 2, in which a curved cross-sectional geometry ($Q_1$, $Q_2$) deviating from a straight line is produced by the elastic deformation on at least one side edge (14a, 14b) of the workpiece (13).

**4.** Method according to one of the preceding claims, in which a curved cross-sectional geometry ($Q_1$, $Q_2$) deviating from a straight line is produced by the elastic deformation on both the side edges (14a, 14b) of the workpiece (13) which run parallel to the second direction (Y), wherein the second direction (Y) preferably extends transversely to a direction (X) of the maximum extent (L) of the workpiece (13).

**5.** Method according to one of the preceding claims, in which, on elastic deformation of the workpiece (13), the first holding element (8a) and a third holding el-

element (8c), which is arranged along the second direction (Y) on the side of the second holding element (8b) opposite to the first holding element (8a), are raised relative to the second holding element (8b), or *vice versa.*

6. Method according to one of the preceding claims, in which an S-shaped or a U-shaped bead (Su, Ss), which preferably extends in a direction (X) of the maximum extent (L) of the workpiece (13), is formed in the workpiece (13) by the elastic deformation.

7. Method according to one of the preceding claims, in which, for elastic deformation, a distance (h) in the lifting direction (Z) between the first and the second holding elements (8a, 8b) is selected which is no greater than one third of the distance (a) in the second direction (Y) between the first and the second holding elements (8a, 8b).

8. Method according to one of the preceding claims, in which the relative distance (h) of the holding elements (8a-c) in the lifting direction (Z) on elastic deformation is selected to be smaller than a deflection ($D_M$) of the lifted, non-elastically deformed workpiece (13) along the first direction (X).

9. Method according to one of the preceding claims, in which the first or the second holding element (8a, 8b) and/or the further first or the further second holding element (10a, 10b) are lifted in the lifting direction (Z) before the workpiece (13) is lifted from the storage plane (E).

10. Method according to one of the preceding claims, in which the holding positions ($P_{1,A}$, $P_{1,B}$, $P_{1,C}$) of the holding elements (8a-c) and/or the further holding positions ($P_{2,A}$, $P_{2,B}$, $P_{2,C}$) of the further holding elements (10a-c) relative to the workpiece (13) in the first direction (X) and/or in the second direction (Y) are selected such that deflection ($D_M$) of the lifted workpiece (13) is minimised.

11. Method according to Claim 10, in which a coordinate ($X_1$) of at least one holding position ($P_{1,A}$, $P_{1,B}$, $P_{1,C}$) in the first direction (X) and/or a coordinate ($X_2$) of at least one further holding position ($P_{2,A}$, $P_{2,B}$, $P_{2,C}$) in the first direction (X) is at a distance from a respectively adjacent side edge (14a, 14b) of the workpiece (13) of between 0.20 L and 0.24 L, wherein L denotes the extension of the workpiece (13) in the first direction (X).

12. Method according to Claim 10 or 11, in which a coordinate of at least one holding position ($P_{1,A}$, $P_{1,C}$) in the second direction (Y) and/or a coordinate of at least one further holding position ($P_{2,A}$, $P_{2,C}$) in the second direction (Y) is at a distance from a respectively adjacent side edge (15a, 15b) of the workpiece (13) of between 0.20 B and 0.24 B, wherein B is the extension of the workpiece (13) in the second direction (Y).

13. Method according to one of the preceding claims, in which, for unloading from a workpiece support (W), the workpiece (13) is lifted and transported to a setting down location (O) or in which, for loading the workpiece support (W), the workpiece (13) is lifted from a setting down location (O) and transported to the workpiece support (W).

14. Loading and/or unloading device (1) for lifting a plate-shaped metallic workpiece (13), comprising:

a holding device (2), in particular a gripping or a suction gripping device, which has a plurality of holding elements (8a-c, 10a-c), in particular gripping or suction gripping elements, wherein the holding elements (8a-c, 10a-c) are liftable and lowerable relative to one another in a lifting direction (Z),
a control device (3) which is designed to actuate the holding device (2) to set down the plurality of holding elements (8a-c, 10a-c) on a workpiece (13) stored in a storage plane (E) and hold them at a plurality of holding positions ($P_{1,A}$, $P_{1,B}$, $P_{1,C}$; $P_{2,A}$, $P_{2,B}$, $P_{2,C}$) associated with the holding elements (8a-c, 10a-c), wherein at least a first and a second holding element (8a, 8b; 8c, 8a) are spaced apart from one another at a first and a second holding position ($P_{1,A}$, $P_{1,B}$; $P_{1,C}$, $P_{1,A}$) along a second direction (Y),
wherein the control device (3) is designed to actuate the holding device (2) to reduce the deflection ($D_M$) of the lifted workpiece (13), to lift the first holding element (8a; 8c) relative to the second holding element (8b; 8a) in a lifting direction (Z) perpendicular to a storage plane (E) of the workpiece (13) or *vice versa,* in order to increase the axial area moment of inertia ($I_Y$) of the workpiece (13) in the second direction (Y) with elastic deformation of the workpiece (13) at a cross-section ($Q_1$), which contains the first and the second holding positions (8a, 8b), to at least 1.5 times, **characterised in that** the first and the second holding elements (8a, 8b; 8c, 8a) are attached to a common support structure (6a) of the holding device (2), which is displaceable along the first direction (X).

15. Loading and/or unloading device according to Claim 14, in which the holding device (2) has at least one further first and second holding element (10a, 10b; 10c, 10a) at at least one further first and second holding position ($P_{2,A}$, $P_{2,B}$; $P_{2,C}$, $P_{2,A}$) which are spaced apart from one another along the second direction (Y) and are spaced from the first and second holding elements (8a, 8b; 8c, 8a) in a first direction (X), wherein the control device (3) is designed to actuate the holding device (2) to lift the further first holding element (10a; 10c) relative to the further second holding element (10b; 10a) in the lifting direction (Z) or *vice versa* in order, with elastic deformation of the workpiece (13), to increase the axial area moment of inertia ($I_Y$) of the workpiece (13) in the second direction (Y) at a further cross-section ($Q_2$) which contains the further first and the further second holding positions ($P_{2,A}$, $P_{2,B}$; $P_{2,C}$, $P_{2,A}$) to at least 1.5 times.

16. Loading and/or unloading device according to Claim 15, in which the further first and the further second holding elements (10a, 10b; 10c, 10a) are attached to a further common support structure (6b) of the holding device (2) which is movable along the first direction (X).

## Revendications

1. Procédé permettant de soulever une pièce (13) métallique en forme de plaque au moyen d'un dispositif de maintien (2), en particulier au moyen d'un dispositif de préhension ou de préhension par aspiration, comprenant :

   le placement d'une pluralité d'éléments de maintien (8a-c, 10a-c), en particulier des éléments de préhension ou de préhension d'aspiration, du dispositif de maintien (2) sur la pièce (13) montée dans un plan de montage (E) et le maintien de la pièce (13) sur une pluralité de positions de maintien ($P_{1,A}$, $P_{1,B}$, $P_{1,C}$ ; $P_{2,A}$, $P_{2,B}$, $P_{2,C}$) associées aux éléments de maintien (8a-c, 10a-c), dans lequel au moins un premier et un deuxième élément de maintien (8a, 8b), au moins à une première et à une deuxième position de maintien ($P_{1,A}$, $P_{1,B}$), sont espacés l'un de l'autre le long d'une seconde direction (Y), ainsi que
   le soulèvement de la pièce (13) du plan de montage (E) au moyen du dispositif de maintien (2), la déformation élastique de la pièce (13) par soulèvement du premier élément de maintien (8a) par rapport au deuxième élément de maintien (8b) ou du deuxième élément de maintien (8b) par rapport au premier élément de maintien (8a) dans une direction de la levée (Z) perpendiculairement au plan de montage (E), dans lequel, lors de la déformation élastique, le moment quadratique axial ($I_Y$) de la pièce (13) dans la seconde direction (Y) au niveau d'une section transversale ($Q_1$) de la pièce (13), laquelle comprend la première et la deuxième position de maintien ($P_{1,A}$, $P_{1,BA}$), est augmenté d'au moins 1,5 fois afin de réduire la flexion ($D_M$) de la pièce (13) levée le long d'une première direction (X), laquelle est, de préférence perpendiculaire à la seconde direction (Y),
**caractérisé en ce
que** le premier et le deuxième élément de maintien (8a, 8b ; 8c, 8a) sont appliqués à une structure porteuse (6a) commune du dispositif de maintien (2), laquelle est déplaçable le long de la première direction (X).

2. Procédé selon la revendication 1, selon lequel le dispositif de maintien (2) comporte un autre premier et deuxième élément de maintien (10a, 10b), lesquels, au niveau d'au moins une autre première et deuxième position de maintien ($P_{2,A}$ ; $P_{2,B}$) le long de la seconde direction (Y), peuvent être espacés l'un de l'autre et, dans la première direction (X), sont espacés des premier et deuxième éléments de maintien (8a, 8b), dans lequel la déformation élastique de la pièce (13) provoque le soulèvement du premier autre élément de maintien (10a) par rapport au deuxième autre élément de maintien (10b) ou du deuxième élément de maintien (8b) par rapport au premier élément de maintien (8a) dans une direction de la levée (Z) perpendiculaire au plan de montage (E), et dans lequel, lors de la déformation élastique, dans lequel le moment quadratique axial ($I_Y$) de la pièce (13) dans la seconde direction (Y) à une autre section transversale de surface ($Q_2$) de la pièce (13), laquelle comprend l'autre première et l'autre deuxième position de maintien ($P_{2,A}$, $P_{2,B}$), est augmenté d'au moins 1,5 fois, dans lequel, de préférence l'autre premier et l'autre deuxième élément de maintien (10a, 10b ; 10c, 10a) sont appliqués à une autre structure porteuse (6b) commune du dispositif de maintien (2), laquelle est déplaçable le long de la première direction (X).

3. Procédé selon la revendication 1 ou 2, selon lequel, par la déformation élastique au niveau d'au moins un bord latéral (14a, 14b) de la pièce (13), une géométrie de section transversale ($Q_1$, $Q_2$) courbée, s'écartant d'une ligne droite, est générée.

4. Procédé selon l'une quelconque des revendications précédentes, selon lequel, par la déformation élastique au niveau des deux bords latéraux (14a, 14b) de la pièce (13), lesquels s'étendent parallèlement à la seconde direction (Y), une géométrie de section transversale ($Q_1$, $Q_2$) courbée, s'écartant d'une ligne droite, est générée, dans lequel la seconde direction (Y) s'étend, de préférence transversalement à une direction (X) de l'extension (L) maximale de la pièce (13).

5. Procédé selon l'une quelconque des revendications précédentes, selon lequel, lors de la déformation élastique de la pièce (13), le premier élément de maintien (8a) et un troisième élément de maintien (8c), lequel est agencé, le long de la seconde direction (Y), sur le côté opposé au premier élément de maintien (8a) du deuxième élément de maintien (8b), sont soulevés par rapport au deuxième élément de maintien (8b), ou inversement.

6. Procédé selon l'une quelconque des revendications précédentes, selon lequel, par la déformation élastique dans la pièce (13), un bourrelet en forme de S ou de U (Su, Ss) est formé, lequel s'étend, de préférence dans une direction (X) de l'extension (L) maximale de la pièce (13).

7. Procédé selon l'une quelconque des revendications précédentes, selon lequel, pour la déformation élastique, une distance (h) dans la direction de la levée (Z) entre le premier et le deuxième élément de maintien (8a, 8b) est choisie non supérieure à un tiers de la distance (a) dans la seconde direction (Y) entre le premier et le deuxième élément de maintien (8a, 8b).

8. Procédé selon l'une quelconque des revendications précédentes, selon lequel la distance (h) relative des éléments de maintien (8a-c) dans la direction de la levée (Z) lors de la déformation élastique est choisie inférieure à une flexion ($D_M$) de la pièce (13) levée, non déformée élastiquement le long de la première direction (X).

9. Procédé selon l'une quelconque des revendications précédentes, selon lequel le premier ou le deuxième élément de maintien (8a, 8b) et/ou l'autre premier ou l'autre deuxième élément de maintien (10a, 10b) sont soulevés dans la direction de la levée (Z) avant que la pièce (13) ne soit soulevée du plan de montage (E).

10. Procédé selon l'une quelconque des revendications précédentes, selon lequel les positions de maintien ($P_{1,A}$, $P_{1,B}$, $P_{1,C}$) des éléments de maintien (8a-c) et/ou les autres positions de maintien ($P_{2,A}$, $P_{2,B}$, $P_{2,C}$) des autres éléments de maintien (10a-c) par rapport à la pièce (13) dans la première direction (X) et/ou dans la seconde direction (Y) sont choisies de telle sorte que la flexion ($D_M$) de la pièce (13) soulevée est réduite au minimum.

11. Procédé selon la revendication 10, selon lequel une coordonnée ($X_1$) de l'au moins une position de maintien ($P_{1,A}$, $P_{1,B}$, $P_{1,C}$) dans la première direction (X) et/ou une coordonnée ($X_2$) de l'au moins une autre position de maintien ($P_{2,A}$, $P_{2,B}$, $P_{2,C}$) dans la première direction (X) présente une distance d'un bord latéral (14a, 14b) adjacent respectif de la pièce (13), laquelle est dans la plage comprise entre 0,20 L et 0,24 L, L désignant l'extension de la pièce (13) dans la première direction (X).

12. Procédé selon la revendication 10 ou 11, selon lequel la coordonnée de l'au moins une position de maintien ($P_{1,A}$, $P_{1,C}$) dans la seconde direction (Y) et/ou la coordonnée de l'au moins une autre position de maintien ($P_{2,A}$, $P_{2,C}$) dans la seconde direction (Y) présente une distance à un bord latéral (15a, 15b) adjacent respectif de la pièce (13), laquelle est dans la plage comprise entre 0,20 B et 0,24 B, B désignant l'extension de la pièce (13) dans la seconde direction (Y).

13. Procédé selon l'une quelconque des revendications précédentes, selon lequel la pièce (13) est soulevée, pour être déchargée d'un porte-pièce (W), et transportée vers un emplacement de rangement (O) ou selon lequel la pièce (13) est levée, pour charger le porte-pièce (W), d'un emplacement de rangement (O) et transportée jusqu'au porte-pièce (W).

14. Dispositif de chargement et/ou de déchargement (1) permettant de soulever une pièce (13) métallique en forme de plaque, comprenant :

un dispositif de maintien (2), en particulier un dispositif de préhension ou de préhension par aspiration, lequel comporte une pluralité d'éléments de maintien (8a-c, 10a-c), en particulier d'éléments de préhension ou de préhension par aspiration, dans lequel les éléments de maintien (8a-c, 10a-c) peuvent être soulevés et abaissés l'un par rapport à l'autre dans une direction de la levée (Z),
un dispositif de commande (3), lequel est conçu pour commander le dispositif de maintien (2), pour placer la pluralité d'éléments de maintien (8a-c, 10a-c) sur une pièce (13) montée dans un plan de montage (E) et pour la maintenir à des positions de maintien ($P_{1,A}$, $P_{1,B}$, $P_{1,C}$ ; $P_{2,A}$, $P_{2,B}$, $P_{2,C}$) associées à une pluralité d'éléments de maintien (8a-c, 10a-c), dans lequel l'au moins un premier et un deuxième élément de maintien (8a, 8b ; 8c, 8a) sont espacés l'un de l'autre à des première et deuxième positions de maintien ($P_{1,A}$, $P_{1,B}$ ; $P_{1,C}$, $P_{1,A}$) le long d'une seconde direction (Y),
dans lequel le dispositif de commande (3) est conçu pour commander le dispositif de maintien (2) afin de réduire la flexion ($D_M$) de la pièce (13) soulevée, pour soulever le premier élément de maintien (8a ; 8c) par rapport au deuxième élément de maintien (8b ; 8a) dans une direction de la levée (Z) perpendiculaire à un plan de montage (E) de la pièce (13), ou inversement, pour augmenter, sous l'action de la déformation élastique de la pièce (13), le moment quadratique axial ($I_Y$) de la pièce (13) dans la seconde direction (Y) au niveau d'une section transversale ($Q_1$), laquelle comporte la première et la deuxième position de maintien (8a, 8b), d'au moins 1,5 fois, **caractérisé en ce que** le premier et le deuxième élément de maintien (8a, 8b ; 8c, 8a) sont appliqués à une structure porteuse (6a) commune du dispositif de maintien (2), laquelle est déplaçable le long de la première direction (X).

15. Dispositif de chargement et/ou de déchargement selon la revendication 14, dans lequel le dispositif de maintien (2) comporte au moins un autre premier et deuxième élément de maintien (10a, 10b ; 10c, 10a), au niveau d'au moins une autre première et deuxième position de maintien ($P_{2,A}$, $P_{2,B}$ ; $P_{2,C}$, $P_{2,A}$), lesquels sont espacés l'un de l'autre le long de la seconde direction (Y) et sont espacés dans une première direction (X) des premier et deuxième éléments de maintien (8a, 8b ; 8c, 8a), dans lequel le dispositif de commande (3) est conçu pour commander le dispositif de maintien (2), pour soulever l'autre premier élément de maintien (10a ; 10c) par rapport à l'autre deuxième élément de maintien (10b ; 10a) dans la direction de la levée (Z), ou inversement, pour augmenter, sous l'action de la déformation élastique de la pièce (13), le moment quadratique axial ($I_Y$) de la pièce (13) dans la seconde direction (Y) au niveau d'une autre section transversale ($Q_2$), laquelle comporte l'autre première et l'autre deuxième position de maintien ($P_{2,A}$, $P_{2,B}$; $P_{2,C}$, $P_{2,A}$) d'au moins 1,5 fois.

16. Dispositif de chargement et/ou de déchargement selon la revendication 15, dans lequel l'autre premier et l'autre deuxième élément de maintien (10a, 10b ; 10c, 10a) sont appliqués à une autre structure porteuse (6b) commune du dispositif de maintien (2), laquelle est déplaçable le long de la première direction (X).

Fig. 1

Fig. 2a

Fig. 2b

Fig. 3a

Fig. 3b

Fig. 4a

Fig. 4b

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016207188 A1
- JP H06134534 A
- US 3826485 A
- EP 2952302 A2
- DE 102014008665 A1
- DE 102011106214 A1
- DE 102016110542